# EUROPÄISCHE PATENTSCHRIFT

(11) **EP 3 224 467 B1**
(45) Veröffentlichungstag und Bekanntmachung des Hinweises auf die Patenterteilung: **19.12.2018**
(21) Anmeldenummer: 15781609.1
(22) Anmeldetag: 07.10.2015
(51) Int. Cl.: F02M 35/10, F02B 33/34, F02B 33/44, F02B 37/00, F02B 37/04, F02B 37/12, F02B 37/16, F02B 37/18, F02B 37/24, F02B 39/10

(54) **AUFLADEEINRICHTUNG FÜR EINEN VERBRENNUNGSMOTOR UND BETRIEBSVERFAHREN FÜR DIE AUFLADEEINRICHTUNG**
SUPERCHARGING DEVICE FOR AN INTERNAL COMBUSTION ENGINE, AND OPERATING METHOD FOR THE SUPERCHARGING DEVICE
DISPOSITIF DE SURALIMENTATION POUR MOTEUR À COMBUSTION INTERNE ET PROCÉDÉ DE FONCTIONNEMENT DU DISPOSITIF DE SURALIMENTATION

(30) Priorität: 24.11.2014 DE 102014223891
(43) Veröffentlichungstag der Anmeldung: 04.10.2017
(73) Patentinhaber: Continental Automotive GmbH, 30165 Hannover (DE)
(72) Erfinder: EHRHARD, Jan, 69168 Wiesloch (DE); AL-HASAN, Nisar, 93055 Regensburg (DE); ZHANG, Hong, 93105 Tegernheim (DE)
(86) Internationale Anmeldenummer: PCT/EP2015/073170
(87) Internationale Veröffentlichungsnummer: WO 2016/083004

(56) Entgegenhaltungen:
- EP-A1- 1 391 595
- DE-A1-102010 035 085
- DE-A1-102011 018 570
- JP-A- 2007 077 854

## Beschreibung

Die Erfindung betrifft eine Aufladeeinrichtung für einen Verbrennungsmotor mit einem Abgasturbolader und ein Betriebsverfahren für diese Aufladeeinrichtung.

Abgasturbolader werden vermehrt zur Leistungssteigerung bei Verbrennungsmotoren, insbesondere in Kraftfahrzeugen eingesetzt. Dies geschieht immer häufiger mit dem Ziel den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen um den Druck im Ansaugtrakt des Verbrennungsmotors zu erhöhen und so eine bessere Befüllung des Brennraumes mit Luft-Sauerstoff zu bewirken und somit mehr Treibstoff, zum Beispiel Benzin oder Diesel, pro Verbrennungsvorgang umsetzen zu können, also die Leistung des Verbrennungsmotors zu erhöhen.

Ein Abgasturbolader weist dazu eine im Abgasstrang des Verbrennungsmotors angeordnete Turbine mit einem durch den Abgasstrom angetriebenen Turbinenlaufrad und einen im Ansaugtrakt angeordneten Verdichter mit einem den Druck aufbauenden Verdichterlaufrad auf. Turbinenlaufrad und Verdichterlaufrad sind drehfest an den gegenüberliegenden Enden einer Rotorwelle befestigt und bilden so den Turboladerläufer, der mit seiner Rotorwelle in einer zwischen Turbine und Verdichter angeordneten Lagereinheit drehgelagert ist. Somit wird mit Hilfe des Abgasmassenstroms das Turbinenlaufrad und über die Rotorwelle wiederum das Verdichterlaufrad angetrieben und die Abgasenergie so zum Druckaufbau im Ansaugtrakt genutzt.

Turbinen und Verdichter sind Strömungsmaschinen und haben aufgrund der physikalischen Gesetzmäßigkeiten einen jeweils von Baugröße und Bauart abhängigen optimalen Betriebsbereich der durch den Massedurchsatz, das Druckverhältnis und die Drehzahl des jeweiligen Laufrades gekennzeichnet ist.
Im Gegensatz dazu ist der Betrieb eines Verbrennungsmotors in einem Kraftfahrzeug von dynamischen Änderungen der Last und des Betriebsbereiches gekennzeichnet.

Um nun den Betriebsbereich des Abgasturboladers an sich ändernde Betriebsbereiche des Verbrennungsmotors anpassen zu können und so ein gewünschtes Ansprechverhalten möglichst ohne spürbare Verzögerungen (Turboloch) zu gewährleisten, werden Abgasturbolader mit zusätzlichen Funktionen, wie zum Beispiel sogenannten variablen Turbinengeometrien (VTG) oder Wastegate-Einrichtungen (WG) auf der Abgas- oder Turbinenseite und Schubumluft- oder Abblas-Einrichtungen auf der Zuluft- oder Verdichterseite ausgestattet. Diese dienen dazu das träge Verhalten und somit das verzögerte Ansprechverhalten des Turboladers zu minimieren und schädliche Betriebszustände zu vermeiden.

Auch ist es bekannt Kombinationen von mehreren Turboladern in paralleler oder sequenzieller Anordnung oder zusätzliche mechanisch oder elektromotorisch betriebene Verdichter, sogenannte Kompressoren oder Supercharger, einzusetzen um den unterschiedlichen Betriebsbedingungen des Verbrennungsmotors gerecht zu werden, die Leistung in jedem Drehzahlbereich und insbesondere bei Beschleunigungsvorgängen effizient zu steigern und insbesondere das gefürchtete Turboloch, verursacht durch zu geringen Ladedruck in niedrigen Drehzahlbereichen des Turboladers in Verbindung mit der Massenträgheit des Turboladerläufers, zu vermeiden.

Eine solche Aufladeeinrichtung, die einen herkömmlichen Abgasturbolader und einen im Frischluftmassenstrom in Reihe oder parallel zu dem Turbolader-Verdichter angeordneten Zusatzverdichter mit einem vom Abgasstrom unabhängigen, beispielsweise elektromotorischen Antrieb aufweist, ist zum Beispiel in der DE 100 23 022 A1 offenbart.

Andererseits besteht in Betriebsphasen, in denen die Leistung des Verbrennungsmotors schnell heruntergefahren wird, ebenfalls durch die Trägheit des Turboladers bedingt, ein Überangebot an Verdichterleistung, was zum sogenannten Verdichterpumpen führen kann. Verdichterpumpen bezeichnet einen Betriebszustand bei dem bereits verdichtete Luft in periodischen Schüben von der Hochdruckseite des Verdichters über das Verdichterlaufrad zurückströmt und so unerwünschte Schwingungen im Ansaugtrakt erzeugt. Um solche Betriebszustände zu vermeiden, wird zum Beispiel über eine Wastegate-Einrichtung Abgas an der Turbine des Turboladers vorbei in den Abgastrakt geleitet und bereits verdichtete Frischluft wird nach dem Verdichter abgeblasen oder über eine Schubumluft-Einrichtung entspannt und in den Ansaugbereich zurückgeführt. Die Anordnung und die Funktionsweise eines solchen Schubumluftventils ist beispielsweise aus den Dokumenten DE 28 23 067 C2 und DE 19712850 A1 bekannt.

Auf diese Weise wird die zur Verfügung stehende Energie ungenutzt in die Umgebung entlassen, was sich negativ auf die Gesamtenergiebilanz und somit den Wirkungsgrad des Verbrennungsmotors auswirkt.

Aus der JP 2007 077 854 A ist bereits eine Aufladevorrichtung für einen Verbrennungsmotor bekannt, welche einen Abgasturbolader und ein Zusatzbauteil aufweist, welches in einer Verstärkerbetriebsart als Verdichter zur Druckerhöhung des Ladeluftmassenstromes und in einer Rekuperationsbetriebsart als Turbine zur Energierückgewinnung arbeiten kann.

Der vorliegenden Erfindung liegt daher die Aufgabe zugrunde, eine Aufladeeinrichtung und ein Betriebsverfahren dafür, für einen Verbrennungsmotor anzugeben, die gleichermaßen dazu geeignet sind den Ladedruckaufbau durch den Abgasturbolader in Beschleunigungs- oder Spitzenlastphasen des Verbrennungsmotors zu unterstützen als auch die überschüssige Energie im Aufladesystem in Abbrems- oder Niederlastphasen des Verbrennungsmotors zu nutzen beziehungsweise im Gesamtsystem Kraftfahrzeug nutzbar zu machen und so den Wirkungsgrad des Verbrennungsmotors zu steigern.

Diese Aufgabe wird durch eine mit den Merkmalen gemäß Patentanspruch 1 sowie durch ein Betriebsverfahren für diese Aufladeeinrichtung mit den Merkmalen gemäß Patentanspruch 11 gelöst.
Vorteilhafte Aus- und Weiterbildungen, welche einzeln oder, sofern es sich nicht um sich gegenseitig ausschließende Alternativen handelt, in Kombination miteinander mit dem Erfindungsgegenstand eingesetzt werden können, sind Gegenstand der jeweils abhängigen Ansprüche.

Ein entsprechender Verbrennungsmotor weist naturgemäß eine Ansaugseite, über die er Frischluft oder ein Brennstoff-Frischluftgemisch aufnimmt, und eine Abgasseite, über die er nach der Verbrennung das entstandene Abgas abgibt, auf. Ein solcher Verbrennungsmotor kann eine ein- oder mehrzylindrige Hubkolbenmaschine sein, die mit Kraftstoffen wie zum Beispiel Benzin, Diesel oder einem brennbaren Gas betrieben wird.

Die erfindungsgemäße Aufladeeinrichtung für einen Verbrennungsmotor, der einen auf seiner Ansaugseite angeordneten Ansaugtrakt und einem auf seiner Abgasseite angeordneten Abgastrakt aufweist, weist einen Abgasturbolader mit einer Abgasturbine, die im Abgastrakt angeordnet ist, und einen Frischluftverdichter mit einer Niederdruckseite und einer Hochdruckseite, der im Ansaugtrakt angeordnet ist, auf.
Der Frischluftverdichter ist auf seiner Niederdruckseite an eine Frischluftzuführeinrichtung angeschlossen und ist auf seiner Hochdruckseite über eine Ladeluftzuleitung, zur Führung eines vom Frischluftverdichter erzeugten Ladeluftmassenstroms, mit der Ansaugseite des Verbrennungsmotors, beispielsweise über ein Drosselklappenventil und einen Ladeluftkrümmer, verbunden.

Die Aufladeeinrichtung zeichnet sich durch die zusätzliche Anordnung eines Rekuperationslader aus, der eine Verdichter-Turbine mit einer Hochdruckseite und einer Niederdruckseite und einen damit gekoppelten elektromechanischen Motor-Generator aufweist. Dabei ist die Verdichter-Turbine über Leitungsverbindungen und Ventileinrichtungen so an die Ladeluftzuleitung gekoppelt, dass der Rekuperationslader in Abhängigkeit von den Einstellungen der Ventileinrichtungen, zumindest einerseits in einer Verstärkerbetriebsart, vom Motor- Generator angetrieben als Verdichter zur Druckerhöhung des Ladeluftmassenstromes in der Ladeluftzuleitung und andererseits in einer Rekuperationsbetriebsart, vom Ladeluftmassenstrom angetrieben als Turbine zur Energierückgewinnung mittels des Motor-Generators betreibbar ist. Weiterhin kann vorgesehen werden, dass in einer Standardbetriebsart der Motor-Generator neutral, also gewissermaßen in Leerlaufbetrieb geschaltet werden kann und er Ladeluftmassenstrom auf direktem Weg vom Frischluftverdichter des Abgasturboladers zur Ansaugseite der Verbrennungsmotors geleitet wird.

Unter dem Begriff Rekuperationslader ist dabei eine Vorrichtung zu verstehen, die eine Schaufelradturbine mit angeschlossenem Generator und einen Schaufelradverdichter mit angeschlossenem Elektromotor in einer Vorrichtung vereint. So sind eine Schaufelradturbine und ein Schaufelradverdichter in einem Laufrad und einem zugehörigen Gehäuse zu einer oben sogenannten und auch im Weiteren so bezeichneten Verdichter-Turbine als Einheit zusammengefasst.
Ebenso sind der Elektromotor und der Generator in einer Drehfeldmaschine zu einem oben sogenannten und auch im Weiteren so bezeichneten Motor-Generator als Einheit zusammengefasst. Die Verdichter-Turbine und der Motor-Generator sind direkt oder über ein zwischengeschaltetes Getriebe miteinander gekoppelt und bilden als Einheit den Rekuperationslader.

Bei der Konzeption der Verdichter-Turbine wird die Eigenschaft von Schaufelrädern genutzt, dass diese einerseits bei Anströmung durch ein Fluid mit erhöhtem Druck von der Hochdruckseite her als Turbine wirken und ein Abtriebsmoment erzeugen können und andererseits bei Antrieb durch ein Antriebsmoment selbst einen Fluidstrom unter Erhöhung des Drucks erzeugen können und so als Verdichter wirken. Die Auslegung des entsprechenden Schaufelrades und die Strömungsführung im Laufradgehäuse zum Einsatz als Verdichter-Turbine muss also beiden Einsatzzwecken Rechnung tragen. Dies kann in einer vorteilhaften Weiterbildung der Verdichter-Turbine mittels einer festen oder einer variablen Anordnung von strömungsführenden Leitschaufeln optimiert werden.

Bei der Konzeption des Motor-Generators wird die Eigenschaft von elektrischen Drehfeldmaschinen genutzt, dass diese einerseits bei Beaufschlagung mit einer Spannung und Strom als Elektromotor antreibend betrieben werden können und andererseits von einem externen Drehmoment angetrieben selbst Spannung erzeugen und Strom abgeben können. Die Auslegung der entsprechenden Drehfeldmaschine zum Einsatz als Motor-Generator muss also beiden Einsatzzwecken Rechnung tragen.

Die vorteilhafte Kombination von Verdichter-Turbine und Motorgenerator zu einem oben sogenannten und auch im Weiteren so bezeichneten Rekuperationslader ermöglicht in vorteilhafter Weise einen Betrieb der Verdichter-Turbine in beiden Strömungsrichtungen, nämlich elektromotorisch angetrieben als Verdichter in einer Verstärkerbetriebsart oder als Turbine den Generator antreibend in einer Rekuperationsbetriebsart. Eine weitere Möglichkeit besteht in der Neutralschaltung des Motor-Generators, was einem Freilauf der Verdichter-Turbine entspricht und in einer hier und im Folgenden sogenannten Standardbetriebsart genutzt werden kann.

Die erfindungsgemäße Aufladeeinrichtung zeichnet sich dadurch aus, dass die Niederdruckseite der Verdichter-Turbine zumindest über eine Niederdruckzweigleitung und eine erste Ventileinrichtung in einem ersten Ladeluftverzweigungspunkt mit der Ladeluftzuleitung in Verbindung steht und die Hochdruckseite der Verdichter-Turbine zumindest über eine Hochdruckzweigleitung und eine zweite Ventileinrichtung in einem zweiten Ladeluftverzeigungspunkt, im Ladeluftstrom stromabwärts des ersten Ladeluftverzeigungspunktes mit der Ladeluftzuführleitung in Verbindung steht, wobei die Ladeluftzuleitung zwischen dem ersten Ladeluftverzweigungspunkt und dem zweiten Ladeluftverzweigungspunkt mittels der ersten oder zweiten Ventileinrichtung oder zumindest einer weiteren Ventileinrichtung sperrbar ist. Diese Konfiguration hat den Vorteil, dass die Strömungsrichtung des Ladeluftmassenstromes über die Verdichter-Turbine in besonders einfacher Weise umgekehrt werden kann, um von der Verstärkerbetriebsart in die Rekuperationsbetriebsart umzuschalten.

Das erfindungsgemäße Betriebsverfahren für eine Aufladeeinrichtung eines Verbrennungsmotors gemäß der obigen Beschreibung ist dadurch gekennzeichnet, dass die Aufladeeinrichtung im Betrieb in Abhängigkeit vom Betriebsverhalten des Verbrennungsmotors und mit Hilfe der Leitungsverbindungen, der Ventileinrichtungen sowie dem Motor-Generator des Rekuperationsladers, zumindest zwischen einer Verstärkerbetriebsart und einer Rekuperationsbetriebsart umgeschaltet werden kann. Weiterhin kann in vorteilhafter Weise zusätzlich eine Standardbetriebsart vorgesehen sein, in die ebenfalls in Abhängigkeit vom Betriebsverhalten des Verbrennungsmotors um- geschaltet werden kann.

So wird zum Beispiel bei angeforderter Drehzahlerhöhung oder bei erhöhter Last des Verbrennungsmotors in die Verstärkerbetriebsart der Aufladeeinrichtung umgeschaltet. Dazu wird der Ladeluftmassenstrom von der Hochdruckseite des Frischluftverdichters zur Niederdruckseite der Verdichter-Turbine und von der Hochdruckseite der Verdichter-Turbine zurück in die Ladeluftzuleitung und so zur Ansaugseite des Verbrennungsmotors geleitet und der Motor-Generator wird in einen Motorbetrieb, die Verdichter-Turbine zur Druckerhöhung in der Ladeluftzuleitung antreibend, geschaltet.

Wird nun andererseits eine schnelle Leistungsreduzierung des Verbrennungsmotors erforderlich oder der vom Frischluftverdichter des Abgasturboladers erzeugte oder erzeugbare Ladeluftmassenstrom im Niedriglastbetrieb nicht vollständig benötigt, so kann in die Rekuperationsbetriebsart der Aufladeeinrichtung umgeschaltet werden. Zur Durchführung der Rekuperationsbetriebsart wird der Ladeluftmassenstrom von der Hochdruckseite des Frischluftverdichters, zumindest teilweise, zur Hochdruckseite der Verdichter-Turbine, über die Verdichter-Turbine entspannt und von der Niederdruckseite der Verdichter-Turbine über einen Abblasstutzen in die Umgebung abgeblasen oder über eine Rückführleitung in die Frischluftzuführeinrichtung eingeleitet oder zur Ansaugseite des Verbrennungsmotors weitergeleitet und der Motor-Generator wird in einen Generatorbetrieb, von der Verdichter-Turbine zur Energierückgewinnung angetrieben, geschaltet.

Nun wird der vom Verbrennungsmotor nicht benötigte Ladeluftmassenstrom unter hohem Druck auf die Verdichter-Turbine geleitet und treibt so den Motor-Generator an, der seinerseits das aufgebrachte Drehmoment in elektrische Energie umsetzt, die direkt einem anderen Verbraucher im Fahrzeug oder einem Speicher zugeführt werden kann. So wird die überschüssige Energie in der Aufladeeinrichtung nicht ungenutzt in die Umgebung abgegeben sondern kann einer sinnvolleren Nutzung, ggf. zu einem späteren Zeitpunkt zugeführt werden.

Ist als weitere Betriebsart eine Standardbetriebsart vorgesehen und wird der Verbrennungsmotor beispielsweise bei mittlerer, gleichbleibender Last betrieben, so kann die Aufladeeinrichtung in die Standardbetriebsart umgeschaltet werden. Zur Durchführung der Standardbetriebsart wird der Ladeluftmassenstrom durch entsprechende Einstellung der Ventileinrichtungen von der Hochdruckseite des Frischluftverdichters über die Ladeluftzuleitung direkt zur Ansaugseite des Verbrennungsmotors geleitet und der Motor-Generator des Rekuperationsladers wird neutral geschaltet.

Die Vorteile der erfindungsgemäßen Aufladeeinrichtung sowie des entsprechenden Betriebsverfahrens liegen vor allem darin, dass je nach Betriebssituation des Verbrennungsmotors neben dem Standard- oder Normalbetrieb, eine schnelle Drehmoment- und somit Drehzahlerhöhung unter Vermeidung eines "Turboloches" ermöglicht und im umgekehrten Fall der schnellen Leistungsreduzierung überschüssige Energie nicht ungenutzt abgeleitet werden muss sondern nutzbar gemacht werden kann.

Eine weitere Ausgestaltung der Aufladeeinrichtung ist dadurch gekennzeichnet, dass ein oder mehrere Ladeluftkühler an einer oder mehreren Positionen in der Ladeluftzuleitung im Ladeluftmassenstrom stromaufwärts oder stromabwärts der Verdichter-Turbine angeordnet sind. Dies wirkt sich vorteilhaft auf die Betriebstemperaturen der im Ladeluftmassenstrom angeordneten Funktionskomponenten aus und bewirkt eine weiter verbesserte Befüllung der Zylinder des Verbrennungsmotors mit Sauerstoff.

In weiterer Ausgestaltung der Aufladeeinrichtung weist die Verdichter-Turbine des Rekuperationsladers ein Verdichter-Turbinen-Gehäuse auf mit einer darin angeordneten feststehenden oder variablen Leitschaufelanordnung zur Optimierung des Abströmverhaltens oder Anströmverhaltens des Ladeluftmassenstroms. Insbesondere eine variable Leitschaufelanordnung bietet den Vorteil, dass zum Beispiel durch Anpassung der Strömungsrichtung des Ladeluftmassenstromes die Leistung und der Wirkungsgrad der Verdichter-Turbine in der jeweiligen Betriebsart gesteigert werden kann.

Bei einer weiteren Ausgestaltung der Aufladeeinrichtung weist die Frischluftzuführeinrichtung eine Frischluftzuführleitung und eine Frischluftfiltereinrichtung auf. Dadurch wird vorteilhaft gewährleistet, dass keine schädlichen Schmutzpartikel vom Frischluftverdichter des Abgasturboladers angesaugt und in die Aufladeeinrichtung transportiert werden.

Anhand der Figuren werden, anhand vereinfachter schematischer Darstellungen, im Folgenden besonders vorteilhafte Ausführungsbeispiele und Weiterbildungen der Erfindung gemäß der abhängigen Ansprüche näher erläutert, obgleich der Gegenstand der Erfindung nicht auf diese Beispiele und insbesondere die darin gezeigten Merkmalskombinationen begrenzt ist.

Es zeigen:
- Fig. 1: ein erstes Ausführungsbeispiel der erfindungsgemäßen Aufladeeinrichtung in Verbindung mit einem Verbrennungsmotor in der Standardbetriebsart;
- Fig. 2: das erste Ausführungsbeispiel der erfindungsgemäßen Aufladeeinrichtung mit unterschiedlichen Ventileinrichtungen in der Verstärkerbetriebsart;
- Fig. 3: das erste Ausführungsbeispiel der erfindungsgemäßen Aufladeeinrichtung wie in Figur 2, jedoch in der Rekuperationsbetriebsart;
- Fig. 4: ein weiteres Ausführungsbeispiel der erfindungsgemäßen Aufladeeinrichtung mit einer unterschiedlichen Anordnung der Leitungsverbindungen und Ventileinrichtungen, in der Standardbetriebsart;
- Fig. 5: das weitere Ausführungsbeispiel der erfindungsgemäßen Aufladeeinrichtung mit unterschiedlichen Ventileinrichtungen in der Verstärkerbetriebsart und
- Fig. 6: das weitere Ausführungsbeispiel der erfindungsgemäßen Aufladeeinrichtung wie in Figur 2, jedoch in der Rekuperationsbetriebsart.

Funktions- und Benennungsgleiche Gegenstände sind in den Figuren durchgehend mit gleichen Bezugszeichen gekennzeichnet.

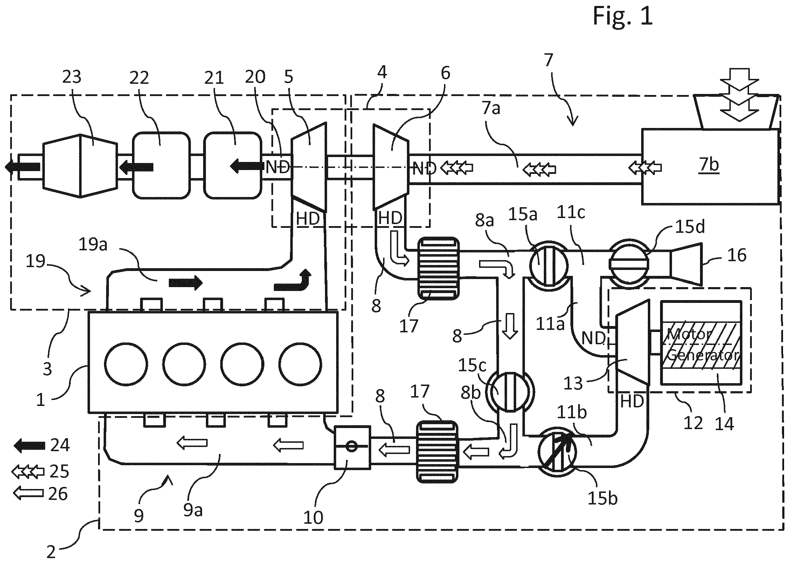

Das Ausführungsbeispiel der Erfindung in Figur 1 zeigt in schematischer vereinfachter Darstellung einen Verbrennungsmotor 1, hier schematisch als vierzylindriger Reihen-Hubkolbenmotor dargestellt, mit einem auf der Ansaugseite 9 angeordneten Ansaugtrakt 2 und einem auf der Abgasseite 19 angeordneten Abgastrakt 3. Weiterhin dargestellt ist ein Abgasturbolader 4 mit einer Abgasturbine 5 im Abgastrakt 3 und einem Frischluftverdichter 6 im Ansaugtrakt 2 und ein sogenannter Rekuperationslader 12, der eine Verdichter-Turbine 13 sowie einen elektromechanischen Motor-Generator 14 aufweist.

Zum Abgastrakt 3 gehören ein Abgaskrümmer 19a, der auf der Abgasseite 19 am Verbrennungsmotor 1 angeschlossen ist, die Abgasturbine 5, die auf ihrer Hochdruckseite HD am Abgaskrümmer 19a angeschlossen ist, eine Abgasabführleitung 20, die auf den Niederdruckseite ND der Abgasturbine 5 angeschlossen ist, sowie ein Abgaskatalysator 21, ein Rußpartikelfilter 22 sowie ein Schalldämpfer 23, die entlang der Abgasabführleitung 20 angeordnet sind. Der Abgasmassenstrom 24 (mit geschwärzten Pfeilen dargestellt) der vom Verbrennungsmotor 1 ausgestoßen wird, wird vom Abgaskrümmer 19a über die Abgasturbine 5 in die Abgasabführleitung 20 und durch Abgaskatalysator 21, Rußpartikelfilter 22 und Schalldämpfer 23 in die Umgebung ausgestoßen.

Zum Ansaugtrakt 2 gehören ein Ladeluftkrümmer 9a, der auf der Ansaugseite 9 am Verbrennungsmotor 1 angeschlossen ist, der Frischluftverdichter 6 des Abgasturboladers 4 sowie eine Ladeluftzuleitung 8, die einerseits über ein Drosselklappenventil 10 mit dem Ladeluftkrümmer 9a verbunden ist und die andererseits mit der Hochdruckseite HD des Frischluftverdichters 6 verbunden ist. Weiterhin umfasst der Ansaugtrakt 2 eine Frischluftzuführeinrichtung 7 mit einer Frischluftzuführleitung 7a und einer Frischluftfiltereinrichtung 7b, die Frischluftzuführleitung 7a ist einerseits mit der Niederdruckseite ND des Frischluftverdichters 6 und andererseits mit der Frischluftfiltereinrichtung 7b verbunden. Ebenfalls dem Ansaugtrakt 2 zugeordnet ist ein Rekuperationslader 12, der eine Verdichter-Turbine 13 und einen damit gekoppelten Motor-Generator 14 aufweist. Die Niederdruckseite ND der Verdichter-Turbine 13 ist über eine Niederdruckzweigleitung 11a in einem ersten Ladeluftverzweigungspunkt 8a mit der Ladeluftzuleitung 8 verbunden. Weiterhin ist an die Niederdruckzweigleitung 11a in einem Niederdruckverzweigungspunkt 11c ein Abblasstutzen 16 angeschlossen. An der Hochdruckseite HD der Verdichter-Turbine 13 ist eine Hochdruckzweigleitung 11b angeschlossen, die wiederum in einem zweiten Ladeluftverzeigungspunkt 8b, im Ladeluftmassenstrom 26 stromabwärts des ersten Ladeluftverzweigungspunktes 8a, an die Ladeluftzuführleitung 8 angeschlossen ist.

Weiterhin sind in den oben genannten Leitungsverbindungen 8, 11a und 11b mehrere Ventileinrichtungen 15a - 15d angeordnet zur Steuerung des Ladeluftmassentroms 26.

So ist in der Niederdruckzweigleitung 11a, zwischen dem ersten Ladeluftverzweigungspunkt 8a und dem Niederdruckverzweigungspunkt 11c eine erste Ventileinrichtung 15a, sowie in der Hochdruckzweigleitung 11b zwischen der Verdichter-Turbine 13 und dem zweiten Ladeluftverzeigungspunkt 8b eine zweite Ventileinrichtung 15b angeordnet. In der Ladeluftzuleitung 8, zwischen dem ersten und dem zweiten Ladeluftverzweigungspunkt 8a, 8b ist eine weitere Ventileinrichtung 15c und zwischen dem Niederdruckverzweigungspunkt 11c und dem Abblasstutzen 16 ist eine weitere Ventileinrichtung 15d angeordnet. Die genannten Ventileinrichtungen 15a - 15d können allesamt als einfache Sperrventile ausgeführt sein, die die zwei Zustände "gesperrt" oder "offen" einnehmen können. Mit einer solchen Ventilanordnung kann zwischen den drei Betriebsarten Sandardbetriebsart, Verstärkerbetriebsart und Rekuperationsbetriebsart umgeschaltet werden. Ein Übergangs- betrieb, bei dem nur ein Teil des Ladeluftmassenstroms 26 zur Rekuperation über die Verdichter-Turbine 13 geleitet wird ist damit nicht möglich. Wenn jedoch, wie in Fig. 1 schematisch dargestellt, die zweite Ventileinrichtung ein Proportionalventil 15b ist, so kann aus der in der reinen Standardbetriebsart gesperrten Ventilstellung heraus, durch geregeltes teilweises Öffnen in beliebiger Ventil-Zwischenstellung ein veränderbarer Anteil des Ladeluftmassenstromes 26 auf die Verdichter-Turbine geleitet werden.

In Figur 1 ist das Ausführungsbeispiel der Aufladeeinrichtung mit einer Ventilstellung gemäß der Standardbetriebsart dargestellt, die eingestellt wird, wenn der Verbrennungsmotor 1 bei mehr oder weniger gleichbleibender Last in einem mehr oder weniger gleichbleibenden niedrigen bis mittleren Drehzahlband läuft. Dabei sind die erste und die zweite Ventileinrichtung 15a, 15b und somit die Niederdruckzweigleitung 11a sowie die Hochdruckzweigleitung 11b gesperrt, wobei gleichzeitig die weitere Ventileinrichtung 15c in der Ladeluftzuleitung offen ist. Die weitere Ventileinrichtung 15d zum Abblasstutzen 16 hin kann dabei sowohl offen als auch gesperrt eingestellt sein. Somit werden der Durchgang vom ersten Ladeluftverzweigungspunkt 8a zur Niederdruckseite ND der Verdichter-Turbine 13 hin und der Durchgang von der Hochdruckzweigleitung 11b zur Ladeluftzuleitung 8 hin geschlossen sowie der Durchgang der Ladeluftzuleitung 8 von der Niederdruckseite ND des Frischluftverdichters 6 zur Ansaugseite 9 des Verbrennungsmotors 1 hin geöffnet.

In der Standardbetriebsart wird somit ein Frischluftmassenstrom 25, in Figur 1 durch Dreifachpfeile dargestellt, über die Frischluftfiltereinrichtung 7b und die Frischluftzuführleitung 7a angesaugt. Im Frischluftverdichter 6 des Abgasturboladers 4 wird der Frischluftmassenstrom 25 verdichtet und auf der Hochdruckseite HD des Frischluftverdichters 6 unter erhöhtem Druck in die Ladeluftzuleitung 8 und über das zumindest teilweise geöffnete Drosselklappenventil 10 und den Ladeluftkrümmer 9a in die Zylinder des Verbrennungsmotors 1 gepumpt. Der auf der Hochdruckseite HD des Frischluftverdichters 6 abgegebene Luftmassenstrom wird in diesem Zusammenhang dann als Ladeluftmassenstrom 26 bezeichnet, wodurch das erhöhte Druckniveau gekennzeichnet werden soll.

Weiter wird zur Durchführung der Standardbetriebsart, der Ladeluftmassenstrom 26 von der Hochdruckseite HD des Frischluftverdichters 6 über die Ladeluftzuleitung 8 direkt zur Ansaugseite 9 des Verbrennungsmotors geleitet und der Motor-Generator 14 des Rekuperationsladers 12 wird neutral geschaltet, was in Figur 1 dadurch gekennzeichnet ist, dass sowohl die "Motor"-Kennzeichnung als auch die "Generator"- Kennzeichnung gestrichen dargestellt ist.

Aus der Standardbetriebsart heraus kann auf einfache Weise in die Rekuperationsbetriebsart umgeschaltet werden indem die weitere Ventileinrichtung 15d zum Abblasstutzen hin geöffnet wird, der Motor-Generator in den Generatorbetrieb geschaltet und dann die zweite Ventileinrichtung 15b geöffnet wird. Bei Verwendung eines Proportionalventils 15b kann die Öffnung fortschreitend oder auch nur teilweise geregelt erfolgen, um genau den Anteil des Ladeluftmassenstroms 26 abzuzweigen, der vom Verbrennungsmotor aktuell nicht benötigt wird.
Zur Durchführung der Verstärkerbetriebsart, werden die erste und die zweite Ventileinrichtung 15a, 15b offen geschaltet und die beiden weiteren Ventileinrichtungen 15c, 15d in der Ladeluftzuleitung 8 und zum Abblasstutzen 16 hin werden gesperrt.

Durch entsprechende Ventilstellung der Ventileinrichtungen 15a, 15b, 15c, 15d ist also die Strömungsrichtung des Ladeluftmassenstromes 26, hier durch die hellen Pfeile dargestellt, über die Verdichter-Turbine 13 umschaltbar.
Die Ausführung der Aufladeeinrichtung gemäß Figur 1 hat dabei den Vorteil, dass mechanisch und Steuerungstechnisch besonders einfache Ventileinrichtungen zum Einsatz kommen können, die einen robusten sowie kostengünstigen Aufbau erlauben.

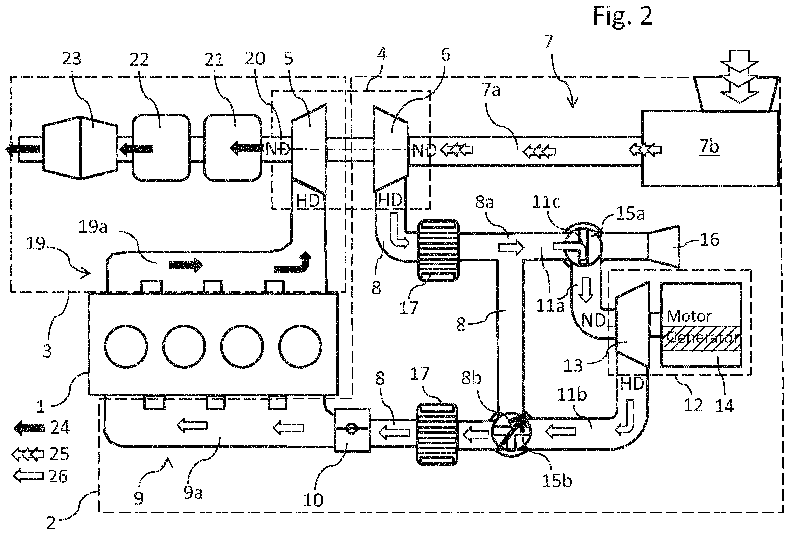

Figur 2 zeigt in Bezug auf die Gesamtanordnung und insbesondere die Leitungsverbindungen 8, 11a, 11b die gleiche Anordnung wie Figur 1 jedoch mit anderer Ausführung und Anordnung der Ventileinrichtungen, wobei die gezeigten Ventileinstellungen der Verstärkerbetriebsart entsprechen.

Die in Figur 2 gezeigte Ausführung der Aufladeeinrichtung ist dadurch gekennzeichnet, dass die erste Ventileinrichtung 15a und die zweite Ventileinrichtung 15b jeweils als Umschaltventil 15a, 15b ausgeführt sind, wodurch weitere Ventileinrichtungen eingespart werden können. Zusätzlich ist die zweite Ventileinrichtung 15b als Proportionalventil 15b (durch Pfeil gekennzeichnet) ausgeführt, wodurch auch ein teilweises Umschalten und somit die Aufteilung des Ladeluftmassenstromes 26 ermöglicht wird. Der Einsatz eines Proportionalventils ist jedoch nicht zwingend erforderlich, sofern ein jeweils vollständiges Umschalten zwischen den Betriebsarten ausreichend ist.

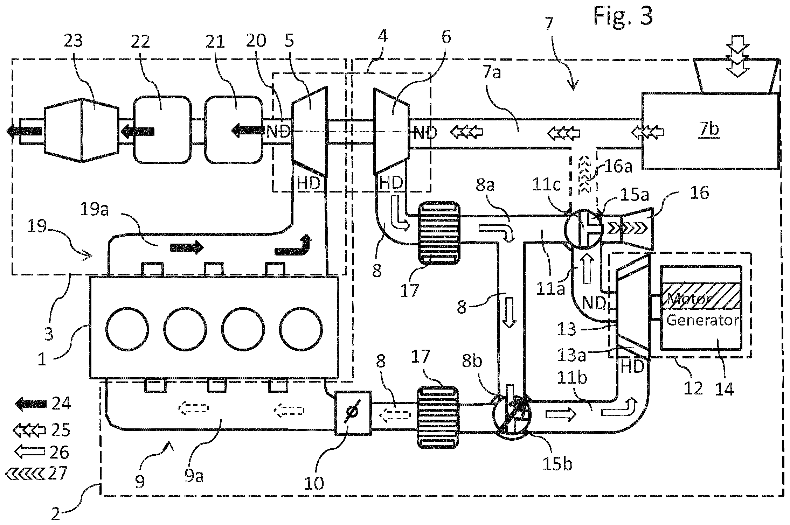

Dabei ist die erste Ventileinrichtung 15a im Niederdruckverzweigungspunkt 11c angeordnet, wobei in einer Ventilstellung (nicht dargestellt) bei geschlossenem Durchgang vom ersten Ladeluftverzweigungspunkt 8a zur Niederdruckseite ND der Verdichter-Turbine 13 der Durchgang von der Niederdruckseite ND der Verdichter-Turbine 13 zum Abblasstutzen 16 oder der Rückführleitung 16a (siehe Figur 3) geöffnet ist und in einer weiteren Ventilstellung, die in Figur 2 dargestellt ist, bei geöffnetem Durchgang vom ersten Ladeluftabzweigpunkt 8a zur Niederdruckseite ND der Verdichter-Turbine 13, der Durchgang zum Abblasstutzen 16 oder der Rückführleitung 16a geschlossen ist.

Die zweite Ventileinrichtung 15b ist im zweiten Ladeluftverzweigungspunkt 8b angeordnet, wobei in einer Ventilstellung bei geöffnetem Durchgang der Ladeluftzuleitung 8 zur Ansaugseite 9 des Verbrennungsmotors 1 der Durchgang von der Ladeluftzuleitung 8 zur Hochdruckzweigleitung 11b zumindest teilweise geschlossen ist (in Fig. 2 nicht dargestellt) und in einer weiteren Ventilstellung bei geschlossenem Durchgang der Ladeluftzuleitung 8 zur Ansaugseite 9 des Verbrennungsmotors 1 und zur Hochdruckzweigleitung 11b, der Durchgang von der Hochdruckzweigleitung 11b zur Ansaugseite 9 des Verbrennungsmotors 1 geöffnet ist, wie in Figur 2 gezeigt, und in einer weiteren Ventilstellung bei geöffnetem Durchgang der Ladeluftzuleitung 8 von der Hochdruckseite HD des Frischluftverdichters 6 zur Hochdruckzweigleitung 11b, der Durchgang der Ladeluftzuleitung 8 zur Ansaugseite 9 des Verbrennungsmotors 1, zumindest teilweise geschlossen ist

In der in Figur 2 dargestellten Verstärkerbetriebsart sind der Durchgang vom ersten Ladeluftabzweigpunkt 8a zur Niederdruckseite ND der Verdichter-Turbine 13 geöffnet sowie der Durchgang zum Abblasstutzen 16 oder der Rückführleitung 16a (siehe Figur 3) geschlossen. Gleichzeitig sind der Durchgang von der Hochdruckzweigleitung 11b zur Ladeluftzuleitung 8 geöffnet sowie der Durchgang der Ladeluftzuleitung 8 im zweiten Ladeluftverzweigungspunkt 8b geschlossen. Gleichzeitig wird der Motor-Generator 14 auf Motorbetrieb geschaltet (nur die "Generator"-Bezeichnung ist gestrichen).

Somit wird im Verstärkerbetrieb der Ladeluftmassenstrom 26 von der Hochdruckseite HD des Frischluftverdichters 6 zur Niederdruckseite ND der Verdichter-Turbine 13 geleitet, von dieser weiter verdichtet und von der Hochdruckseite HD der Verdichter-Turbine 13 zurück in die Ladeluftzuleitung 8 und zur Ansaugseite 9 des Verbrennungsmotors 1 geleitet. Der Motor-Generator 14 treibt im Motorbetrieb die Verdichter-Turbine 13 zur Druckerhöhung in der Ladeluftzuleitung 8 an.

In Figur 3 ist die gleiche Anordnung der Aufladeeinrichtung wie in Figur 2 dargestellt, jedoch befinden sich die beiden Umschaltventile 15a, 15b in der Einstellung die der Rekuperationsbetriebsart entspricht. Weiterhin ist in Figur 3 die Rückführleitung 16a ergänzend, mit gestrichelter Linie angedeutet, die anstatt eines Abblasstutzens 16 vorgesehen werden kann und die den Abblasmassenstrom 27 in den Luftkreislauf vor den Frischluftverdichter 6 zurückführt. Darüber hinaus ist in Figur 3 auch die Anordnung einer feststehenden oder variablen Leitschaufelanordnung 13a symbolisch dargestellt.

Zur Durchführung der Rekuperationsbetriebsart, ist der Durchgang vom ersten Ladeluftabzweigpunkt 8a zur Niederdruckseite ND der Verdichter-Turbine 13 hin und zum Abblasstutzen 16 oder der Rückführleitung 16a hin geschlossen und der Durchgang vom zweiten Ladeluftabzweigpunkt 8b zur Hochdruckseite HD der Verdichter-Turbine 13 hin zumindest teilweise geöffnet sowie der Durchgang von der Niederdruckseite ND der Verdichter-Turbine 13 zum Abblasstutzen 16 oder der Rückführleitung 16a hin geöffnet. Der Motor-Generator 14 ist gleichzeitig auf Generatorbetrieb ("Motor"-Bezeichnung gestrichen) geschaltet.

Zur Durchführung der Rekuperationsbetriebsart wird somit der Ladeluftmassenstrom 26 von der Hochdruckseite HD des Frischluftverdichters 6, zumindest teilweise, zur Hochdruckseite HD der Verdichter-Turbine 13 und von der Niederdruckseite ND der Verdichter-Turbine 13 über einen Abblasstutzen 16 in die Umgebung abgeblasen oder über eine Rückführleitung 16a in die Frischluftzuführeinrichtung 7 eingeleitet, wobei der Motor-Generator 14 von der Verdichter-Turbine 13 zur Energierückgewinnung angetrieben wird.

Die Ausführung der Aufladeeinrichtung gemäß den Figuren 2 und 3 hat dabei den Vorteil, dass die Anzahl der benötigten mechanischen Komponenten und somit auch der benötigte Bauraum für die Aufladeeinrichtung reduziert sind.

Die in den Figuren 1, 2 und 3 dargestellten Aufladeeinrichtungen sind weiterhin dadurch gekennzeichnet, dass zwei Ladeluftkühler 17 an zwei unterschiedlichen Positionen in der Ladeluftzuleitung 8 im Ladeluftmassenstrom 26 angeordnet sind. Ein Ladeluftkühler 17 ist zwischen der Hochdruckseite HD des Frischluftverdichters 6 und dem ersten Ladeluftverzeigungspunkt 8a angeordnet und der zweite Ladeluftkühler 17 ist zwischen dem zweiten Ladeluftverzweigungspunkt 8b und dem Drosselklappenventil 10 angeordnet. In vorteilhafter Weise ergibt sich so für die Standartbetriebsart und die Verstärkerbetriebsart eine zweistufige Ladeluftkühlung und in der Rekuperationsbetriebsart wird ein gekühlter Ladeluftmassenstrom 26 auf die Verdichter-Turbine 13 geleitet. Eine teure Auslegung der Verdichter-Turbine 13 für erhöhte Betriebstemperauren ist dadurch nicht erforderlich.

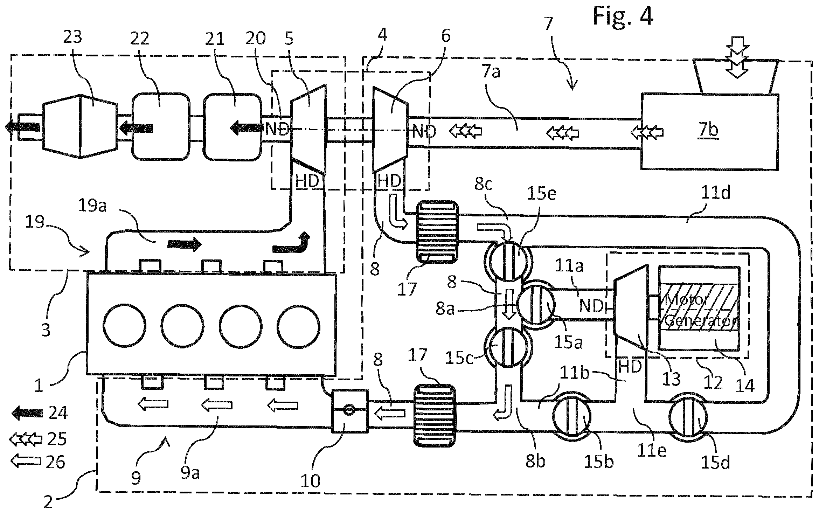

Figur 4 zeigt nun eine weitere Ausführungsform der erfindungsgemäßen Aufladeeinrichtung mit einer gegenüber den Beispielen aus den Figuren 1 bis 3 geänderten Anordnung der Leitungsverbindungen und Ventileinrichtungen.

Die in Figur 4 dargestellte Aufladeeinrichtung zeichnet sich dadurch aus, dass gegenüber den vorgenannten Beispielen auf einen Abblasstutzen 16 oder eine Rückführleitung 16a verzichtet wird und stattdessen eine Ladeluftumleitung 11d vorgesehen ist.

Auch in diesem Beispiel gehören zum Ansaugtrakt 2 ein Ladeluftkrümmer 9a, der auf der Ansaugseite 9 am Verbrennungsmotor 1 angeschlossen ist, der Frischluftverdichter 6 des Abgasturboladers 4 sowie eine Ladeluftzuleitung 8, die einerseits über ein Drosselklappenventil 10 mit dem Ladeluftkrümmer 9a verbunden ist und die andererseits mit der Hochdruckseite HD des Frischluftverdichters 6 verbunden ist. Weiterhin umfasst der Ansaugtrakt 2 eine Frischluftzuführeinrichtung 7 mit einer Frischluftzuführleitung 7a, die einerseits mit der Niederdruckseite ND des Frischluftverdichters 6 und andererseits mit einer Frischluftfiltereinrichtung 7b verbunden ist. Ebenfalls dem Ansaugtrakt 2 zugeordnet ist ein Rekuperationslader 12, der eine Verdichter-Turbine 13 und einen damit gekoppelten Motor-Generator 14 aufweist. Die Niederdruckseite ND der Verdichter-Turbine 13 ist auch in diesem Beispiel über eine Niederdruckzweigleitung 11a in einem ersten Ladeluftverzweigungspunkt 8a mit der Ladeluftzuleitung 8 verbunden.
An der Hochdruckseite HD der Verdichter-Turbine 13 ist eine Hochdruckzweigleitung 11b angeschlossen, die wiederum in einem zweiten Ladeluftverzeigungspunkt 8b, im Ladeluftmassenstrom 26 stromabwärts, an die Ladeluftzuführleitung 8 angeschlossen ist.

Die besagte Ladeluftumleitung 11d ist einerseits an einem dritten Ladeluftverzweigungspunkt 8c im Ladeluftmassenstrom 26 stromaufwärts des ersten Ladeluftverzweigungspunktes 8a an der Ladeluftzuleitung 8 angeschlossen und steht andererseits in einem Hochdruckverzweigungspunkt 11e mit der Hochdruckzweigleitung 11b in Verbindung.

Weiterhin sind in den oben genannten Leitungsverbindungen 8, 11a 11b und 11d mehrere Ventileinrichtungen 15a - 15d angeordnet zur Steuerung des Ladeluftmassentroms 26.
So ist in der Niederdruckzweigleitung 11a, zwischen dem ersten Ladeluftverzweigungspunkt 8a und der Niederdruckseite ND der Verdichter-Turbine eine erste Ventileinrichtung 15a, sowie in der Hochdruckzweigleitung 11b zwischen der Verdichter-Turbine 13 und dem zweiten Ladeluftverzeigungspunkt 8b eine zweite Ventileinrichtung 15b angeordnet. Weiterhin ist in der Ladeluftzuleitung 8, zwischen dem ersten und dem zweiten Ladeluftverzweigungspunkt 8a, 8b eine weitere Ventileinrichtung 15c angeordnet, was soweit prinzipiell der Anordnung aus Figur 1 entspricht.
Darüber hinaus ist eine weitere Ventileinrichtung 15e in der Ladeluftzuleitung 8 zwischen dem dritten Ladeluftverzweigungspunkt 8c und dem ersten Ladeluftverzweigungspunkt 8a sowie eine weitere Ventileinrichtung 15d in der Ladeluftumleitung 11d zwischen dem dritten Ladeluftverzweigungspunkt 8c und dem Hochdruckverzweigungspunkt 11e angeordnet. Somit ist die Ladeluftzuleitung 8 vom ersten Ladeluftverzweigungspunkt 8a zum zweiten Ladeluftverzweigungspunkt 8b hin mittels der vorgenannten weiteren Ventileinrichtung 15c und vom ersten Ladeluftverzweigungspunkt 8a zum dritten Ladeluftverzweigungspunkt 8c hin mittels der vorgenannten weiteren Ventileinrichtung 15e sperrbar.

Die genannten Ventileinrichtungen 15a - 15e in Figur 4 können allesamt als einfache Sperrventile ausgeführt sein, die die zwei Zustände "gesperrt" oder "offen" einnehmen können. Mit einer solchen Ventilanordnung kann zwischen den drei Betriebsarten Standardbetriebsart, Verstärkerbetriebsart und Rekuperationsbetriebsart umgeschaltet werden. Ein Übergangsbetrieb, bei dem nur ein Teil des Ladeluftmassentroms 26 zur Rekuperation über die Verdichter-Turbine 13 geleitet wird ist damit nicht möglich.

Die in Figur 4 dargestellten Ventileinstellungen charakterisieren die Standardbetriebsart, in der lediglich die beiden in der Ladeluftzuleitung 8 angeordneten weiteren Ventileinrichtungen 15c und 15e offen und die restlichen Ventileinrichtungen 15a, 15b, 15d gesperrt sind. Wobei die Stellung der weiteren Ventileinrichtung 15d hier unerheblich ist, da die Strömungspfade von der Ladeluftzuleitung 8 zur Verdichter-Turbine 13 in beiden Richtungen ohnehin bereits durch die erste und die zweite Ventileinrichtung 15a, 15b gesperrt sind.
Somit ist zur Durchführung der Standardbetriebsart der Durchgang der Ladeluftleitung 8 von der Hochdruckseite HD des Frischluftverdichter 6 zur Ansaugseite 9 des Verbrennungsmotors 1 geöffnet und der Durchgang der Niederdruckzweigleitung 11a zur Niederdruckseite ND der Verdichter-Turbine 13 hin sowie der Durchgang der Hochdruckzweigleitung 11b zur Ladeluftzuleitung 8 hin geschlossen.

Auf diese Weise wird der Ladeluftmassenstrom 26 von der Hochdruckseite HD des Frischluftverdichters 6 über die Ladeluftzuleitung 8 direkt, also nicht über die Verdichter-Turbine 13, über das Drosselklappenventil 10 und den Ansaugkrümmer 9a zur Ansaugseite 9 des Verbrennungsmotors geleitet wobei der Motor-Generator 14 des Rekuperationsladers 12 neutral geschaltet ist.

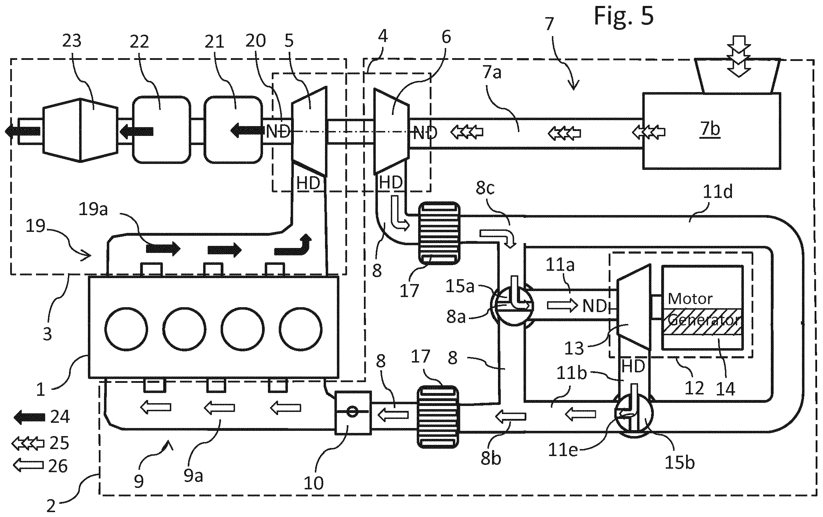

Figur 5 zeigt weitgehend die gleiche Ausführung der Aufladeeinrichtung wie Figur 4, lediglich die Ausführung und die Anordnung der Ventileinrichtungen unterscheidet sich und die dargestellten Einstellungen der Ventileinrichtungen 15a, 15b charakterisieren die Verstärkerbetriebsart.

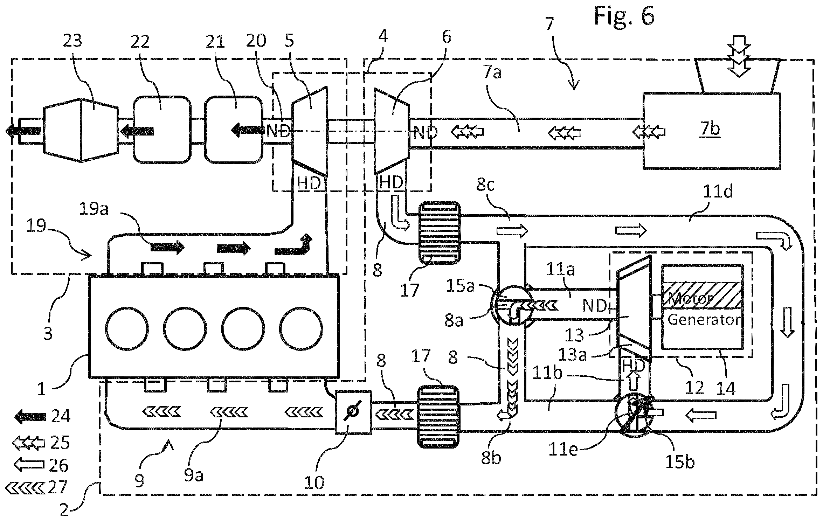

Die in Figur 5 dargestellte Ausführung der Aufladeeinrichtung ist dadurch gekennzeichnet, dass die erste und die zweite Ventileinrichtung 15a Umschaltventile 15a, 15b sind.
Die erste Ventileinrichtung 15a ist dabei im ersten Ladeluftverzweigungspunkt 8a angeordnet, wobei in einer Ventilstellung, bei geschlossenem Durchgang vom ersten Ladeluftverzweigungspunkt 8a zur Niederdruckzweigleitung 11a hin, der Durchgang der Ladeluftzuleitung 8 von der Hochdruckseite HD des Frischluftverdichters 6 zur Ansaugseite 9 des Verbrennungsmotors 1 geöffnet ist (in Figur 5 nicht dargestellt) . Und wobei in einer weiteren Ventilstellung, bei geschlossenem Durchgang vom ersten Ladeluftverzweigungspunkt 8a zur Ansaugseite 9 des Verbrennungsmotors 1 hin, der Durchgang von der Hochdruckseite HD des Frischluftverdichters 6 zur Niederdruckzweigleitung 11a hin geöffnet ist, wie in Figur 5 dargestellt. Und wobei in einer weiteren Ventilstellung, bei geschlossenem Durchgang der Ladeluftzuleitung 8 vom ersten Ladeluftverzweigungspunkt 8a zur Hochdruckseite HD des Frischluftverdichters hin, der Durchgang von der Niederdruckzweigleitung 11a zur Ansaugseite 9 hin geöffnet ist (siehe Figur 6).

Die zweite Ventileinrichtung 15b ist im Hochdruckverzweigungspunkt 11e angeordnet, wobei in einer Ventilstellung, bei geschlossenem Durchgang von der Ladeluftumleitung 11d zur Hochdruckzweigleitung 11b hin, der Durchgang von der Hochdruckseite HD der Verdichter-Turbine 13 zur Ansaugseite 9 des Verbrennungsmotors 1 hin geöffnet ist, wie in Figur 5 dargestellt, und in einer weiteren Ventilstellung, bei geöffnetem Durchgang von der Ladeluftumleitung 11d zur Hochdruckseite HD der Verdichter-Turbine 13 hin, der Durchgang von der Ladeluftumleitung 11d zur Ansaugseite 9 des Verbrennungsmotors 1 hin zumindest teilweise geschlossen ist (siehe Figur 6).

Wie aus Figur 5 ersichtlich ist, ist zur Durchführung der Verstärkerbetriebsart, der Durchgang vom dritten Ladeluftabzweigpunkt 8c über den ersten Ladeluftabzweigpunkt 8a zur Niederdruckseite ND der Verdichter-Turbine 13 hin und der Durchgang von der Hochdruckseite HD der Verdichter-Turbine 13 zur Ladeluftzuleitung 8 hin geöffnet, wobei gleichzeitig der Durchgang der Ladeluftumleitung 11d zur Hochdruckseite HD der Verdichter-Turbine 13 hin und der Durchgang der Ladeluftzuleitung 8 zwischen dem ersten und dem zweiten Ladeluftverzweigungspunkt 8a, 8b geschlossen ist.

Somit wird der Ladeluftmassenstrom 26 von der Hochdruckseite HD des Frischluftverdichters 6 über die Niederdruckzweigleitung 11a zur Niederdruckseite ND der Verdichter-Turbine 13 und von der Hochdruckseite HD der Verdichter-Turbine 13 über die Hochdruckzweigleitung 11b zurück in die Ladeluftzuleitung 8 und zur Ansaugseite 9 des Verbrennungsmotors 1 geleitet. Der Motor-Generator 14 ist dabei in einen Motorbetrieb geschaltet ("Generator"-Bezeichnung gestrichen), und treibt die Verdichter-Turbine 13 zur Druckerhöhung in der Ladeluftzuleitung 8 an.

Figur 6 zeigt weitgehend das gleiche Ausführungsbeispiel der Aufladeeinrichtung wie Figur 5. Das Ausführungsbeispiel der Figur 6 unterscheidet sich dadurch, dass die Verdichter-Turbine 13 beispielhaft eine schematisch vereinfacht dargestellte, feststehende oder variable Leitschaufelanordnung 13a aufweist, die zweite Ventileinrichtung 15b ein Proportional-Umschaltventil 15a ist und dass die dargestellten Ventileinstellungen die Rekuperationsbetriebsart charakterisieren.

Zur Durchführung der Rekuperationsbetriebsart ist der Durchgang der Ladeluftumleitung 11d vom dritten Ladeluftverzeigungspunkt 8c zur Hochdruckseite HD der Verdichter-Turbine 13 hin zumindest teilweise geöffnet und zur Ansaugseite 9 des Verbrennungsmotors 1 hin zumindest teilweise geschlossen und der Durchgang von der Niederdruckseite ND der Verdichter-Turbine 13 zur Ansaugseite 9 des Verbrennungsmotors 13 hin ist geöffnet, wobei gleichzeitig der Durchgang der Ladeluftzuleitung 8 zwischen dem dritten und dem ersten Ladeluftverzeigungspunkt 8c, 8a geschlossen ist.

Dadurch wird der Ladeluftmassenstrom 26 von der Hochdruckseite HD des Frischluftverdichters 6, zumindest teilweise, zur Hochdruckseite HD der Verdichter-Turbine 13 geleitet und über die Verdichter-Turbine 13 entspannt. Bei dieser Ausführung der Aufladeeinrichtung wird nun der auf der Niederdruckseite ND der Verdichter-Turbine 13 austretende Abblasmassenstrom 27 nicht in die Umgebung abgeblasen, sondern von der Niederdruckseite ND der Verdichter-Turbine 13 über die Ladeluftzuleitung 8, das Drosselklappenventil 10 und den Ladeluftkrümmer 9a zur Ansaugseite 9 des Verbrennungsmotors 1 weitergeleitet. Dabei ist der Motor-Generator 14 in einen Generatorbetrieb ("Motor"-Bezeichnung gestrichen) geschaltet und wird von der Verdichter-Turbine 13 zur Energierückgewinnung angetrieben.

Durch die Ausgestaltung der zweiten Ventileinrichtung 15b als Proportional-Umschaltventil 15b ist es möglich nur einen Anteil des Ladeluftmassenstromes 26 über die Verdichter-Turbine 13 zu entspannen und so ein für den aktuellen Betriebszustand des Verbrennungsmotors 1 erforderliches Druckniveau einzustellen und zu regeln.

Nochmal kurz zusammengefasst betrifft die Erfindung also eine Aufladeeinrichtung und ein Betriebsverfahren für diese Aufladeeinrichtung für einen Verbrennungsmotor 1, die einen Abgasturbolader 4 und einen Rekuperationslader 12 aufweist, wobei der Rekuperationslader 12 eine Verdichter-Turbine 13 und einen damit gekoppelten elektromechanischen Motor-Generator 14 aufweist. Dabei ist die Hochdruckseite HD und die Niederdruckseite ND der Verdichter-Turbine 13 mittels Leitungsverbindungen und Ventileinrichtungen 15a-d an die Ladeluftzuleitung 8 stromabwärts des Frischluftverdichters 6 des Abgasturboladers 4 anschließbar, wobei der genannte Rekuperationslader 12 mittels der Ventileinrichtungen 15a-d und dem Motor-Generator 14 zumindest zwischen einer Verstärkerbetriebsart und einer Rekuperationsbetriebsart umgeschaltet werden kann, wobei er einerseits in der Verstärkerbetriebsart vom Motor-Generator 14 angetrieben als Verdichter zur Druckerhöhung in der Frischluftzuführleitung 8 oder andererseits vom Ladeluftstrom angetrieben als Turbine zur Energierückgewinnung mittels des Motor-Generators 14 betrieben werden kann.

## Patentansprüche

1. Aufladeeinrichtung für einen Verbrennungsmotor (1) mit einer Ansaugseite (9) und einer Abgasseite (19) und einem auf der Ansaugseite (9) angeordneten Ansaugtrakt (2) und einem auf der Abgasseite angeordneten Abgastrakt (3), die aufweist,
- einen Abgasturbolader (4) mit einer Abgasturbine (5), die im Abgastrakt (3) angeordnet ist und einen Frischluftverdichter (6) mit einer Niederdruckseite (ND) und einer Hochdruckseite (HD), der im Ansaugtrakt (2) angeordnet ist;
- eine Frischluftzuführeinrichtung (7), an die der Frischluftverdichter (6) auf seiner Niederdruckseite (ND) angeschlossen ist und
- eine Ladeluftzuleitung (8), die die Hochdruckseite (HD) des Frischluftverdichters (6) zur Führung eines vom Frischluftverdichter (6) erzeugten Ladeluftmassenstroms (26) mit der Ansaugseite des Verbrennungsmotors (1) verbindet und
- einen Rekuperationslader (12), der eine Verdichter-Turbine (13) mit einer Hochdruckseite (HD) und einer Niederdruckseite (ND) und einen damit gekoppelten elektromechanischen Motor-Generator (14) aufweist,
**dadurch gekennzeichnet, dass**
- die Verdichter-Turbine (13) über Leitungsverbindungen (11a, 11b, 11e) und Ventileinrichtungen (15a - 15e) so an die Ladeluftzuleitung (8) gekoppelt ist,
dass die Niederdruckseite (ND) der Verdichter-Turbine (13) zumindest über eine Niederdruckzweigleitung (11a) und eine erste Ventileinrichtung (15a) in einem ersten Ladeluftverzweigungspunkt (8a) mit der Ladeluftzuleitung (8) in Verbindung steht und die Hochdruckseite (HD) der Verdichter-Turbine (13) zumindest über eine Hochdruckzweigleitung (11b) und eine zweite Ventileinrichtung (15b), in einem zweiten Ladeluftverzeigungspunkt (8b), stromabwärts des ersten Ladeluftverzeigungspunktes (8a) mit der Ladeluftzuführleitung (8) in Verbindung steht und
die Ladeluftzuleitung (8) zwischen dem ersten Ladeluftverzweigungspunkt (8a) und dem zweiten Ladeluftverzweigungspunkt (8b) mittels der ersten oder zweiten Ventileinrichtung (15a, 15b) oder zumindest einer weiteren Ventileinrichtung (15c) sperrbar ist,
so dass der Rekuperationslader (12) in Abhängigkeit von den Einstellungen der Ventileinrichtungen (15a - 15e), zumindest einerseits in einer Verstärkerbetriebsart, vom Motor-Generator (14) angetrieben, als Verdichter zur Druckerhöhung des Ladeluftmassenstroms (26) in der Ladeluftleitung (8) und andererseits in einer Rekuperationsbetriebsart, vom Ladeluftmassenstrom angetrieben, als Turbine zur Energierückgewinnung mittels des Motor-Generators (14) betreibbar ist.

2. Aufladeeinrichtung nach Anspruch 1, **dadurch gekennzeichnet, dass** ein Abblasstutzen (16) oder eine an die Frischluftzuführleitung (7) angeschlossene Rückführleitung (16a) über die vorgenannte erste Ventileinrichtung (15a) oder eine weitere Ventileinrichtung (15d) in einem Niederdruckverzweigungspunkt (11c) zwischen dem ersten Ladeluftverzweigungspunkt (8a) und der Niederdruckseite (ND) der Verdichter-Turbine (13) mit der Niederdruckzweigleitung (11a) in Verbindung steht.

3. Aufladeeinrichtung nach Anspruch 2, **dadurch gekennzeichnet, dass** die erste Ventileinrichtung (15a) ein Umschaltventil (15a) ist, das im Niederdruckverzweigungspunkt (11c) angeordnet ist, wobei
- in einer Ventilstellung bei geschlossenem Durchgang vom ersten Ladeluftverzweigungspunkt (8a) zur Niederdruckseite (ND) der Verdichter-Turbine (13) der Durchgang von der Niederdruckseite (ND) der Verdichter-Turbine (13) zum Abblasstutzen (16) oder der Rückführleitung (16a) geöffnet ist und
- in einer weiteren Ventilstellung bei geöffnetem Durchgang vom ersten Ladeluftabzweigpunkt (8a) zur Niederdruckseite (ND) der Verdichter-Turbine (13), der Durchgang zum Abblasstutzen (16) oder der Rückführleitung (16a) geschlossen ist.

4. Aufladeeinrichtung nach Anspruch 2 oder 3, **dadurch gekennzeichnet, dass** die zweite Ventileinrichtung (15b) ein Umschaltventil (15b) ist, das im zweiten Ladeluftverzweigungspunkt (8b) angeordnet ist, wobei
- in einer Ventilstellung bei geöffnetem Durchgang der Ladeluftzuleitung (8) zur Ansaugseite (9) des Verbrennungsmotors (1) der Durchgang von der Ladeluftzuleitung (8) zur Hochdruckzweigleitung (11b) zumindest teilweise geschlossen ist und
- in einer weiteren Ventilstellung bei geschlossenem Durchgang der Ladeluftzuleitung (8) zur Ansaugseite (9) des Verbrennungsmotors (1) und zur Hochdruckzweigleitung (11b), der Durchgang von der Hochdruckzweigleitung (11b) zur Ansaugseite (9) des Verbrennungsmotors (1) geöffnet ist und
- in einer weiteren Ventilstellung bei geöffnetem Durchgang der Ladeluftzuleitung (8) von der Hochdruckseite (HD) des Frischluftverdichters (6) zur Hochdruckzweigleitung (11b), der Durchgang der Ladeluftzuleitung (8) zur Ansaugseite (9) des Verbrennungsmotors (1), zumindest teilweise geschlossen ist

5. Aufladeeinrichtung nach Anspruch 1, **dadurch gekennzeichnet, dass** eine Ladeluftumleitung (11d) vorgesehen ist, die einerseits an einem dritten Ladeluftverzweigungspunkt (8c) stromaufwärts des ersten Ladeluftverzweigungspunktes (8a) an der Ladeluftzuleitung (8) angeschlossen ist und andererseits über die vorgenannte zweite Ventileinrichtung (15b) oder eine weitere Ventileinrichtung (15d) in einem Hochdruckverzweigungspunkt (11e) mit der Hochdruckzweigleitung (11b) in Verbindung steht und dass die Ladeluftzuleitung (8) vom ersten Ladeluftverzweigungspunkt (8a) zum dritten Ladeluftverzweigungspunkt (8c) hin mittels der vorgenannten ersten Ventileinrichtung (15a) oder einer weiteren Ventileinrichtung (15e) sperrbar ist.

6. Aufladeeinrichtung nach Anspruch 5, **dadurch gekennzeichnet, dass** die erste Ventileinrichtung (15a) ein Umschaltventil (15a) ist, das im ersten Ladeluftverzweigungspunkt (8a) angeordnet ist, wobei
- in einer Ventilstellung, bei geschlossenem Durchgang vom ersten Ladeluftverzweigungspunkt (8a) zur Niederdruckzweigleitung (11a) hin, der Durchgang der Ladeluftzuleitung (8) von der Hochdruckseite (HD) des Frischluftverdichters (6) zur Ansaugseite (9) des Verbrennungsmotors (1) geöffnet ist und
- in einer weiteren Ventilstellung, bei geschlossenem Durchgang vom ersten Ladeluftverzweigungspunkt (8a) zur Ansaugseite (9) des Verbrennungsmotors (1) hin, der Durchgang von der Hochdruckseite (HD) des Frischluftverdichters (6) zur Niederdruckzweigleitung (11a) hin geöffnet ist und
- in einer weiteren Ventilstellung, bei geschlossenem Durchgang der Ladeluftzuleitung (8) vom ersten Ladeluftverzweigungspunkt (8a) zur Hochdruckseite (HD) des Frischluftverdichters hin, der Durchgang von der Niederdruckzweigleitung (11a) zur Ansaugseite (9) hin geöffnet ist.

7. Aufladeeinrichtung nach Anspruch 5 oder 6, **dadurch gekennzeichnet, dass** die zweite Ventileinrichtung (15b) ein Umschaltventil (15b) ist, das im Hochdruckverzweigungspunkt (11e) angeordnet ist, wobei
- in einer Ventilstellung, bei geschlossenem Durchgang von der Ladeluftumleitung (11d) zur Hochdruckzweigleitung (11b) hin, der Durchgang von der Hochdruckseite (HD) der Verdichter-Turbine (13) zur Ansaugseite (9) des Verbrennungsmotors (1) hin geöffnet ist und
- in einer weiteren Ventilstellung, bei geöffnetem Durchgang von der Ladeluftumleitung (11d) zur Hochdruckseite (HD) der Verdichter-Turbine (13) hin, der Durchgang von der Ladeluftumleitung (11d) zur Ansaugseite (9) des Verbrennungsmotors (1) hin zumindest teilweise geschlossen ist.

8. Aufladeeinrichtung nach einem der vorhergehenden Ansprüche, **dadurch gekennzeichnet, dass** ein oder mehrere Ladeluftkühler (17) an einer oder mehreren Positionen in der Ladeluftzuleitung (8) im Ladeluftmassenstrom (26) stromaufwärts oder stromabwärts der Verdichter-Turbine (13) angeordnet sind.

9. Aufladeeinrichtung nach einem der vorhergehenden Ansprüche, **dadurch gekennzeichnet, dass** die Verdichter-Turbine (13) des Rekuperationsladers (12) ein Verdichter-Turbinen-Gehäuse aufweist mit einer darin angeordneten feststehenden oder variablen Leitschaufelanordnung (13a) zur Optimierung des Abströmverhaltens oder Anströmverhaltens des Ladeluftmassenstroms (26).

10. Aufladeeinrichtung nach einem der vorhergehenden Ansprüche, **dadurch gekennzeichnet, dass** die Frischluftzuführeinrichtung (7) eine Frischluftzuführleitung (7a) und eine Frischluftfiltereinrichtung (7b) aufweist.

11. Betriebsverfahren für eine Aufladeeinrichtung eines Verbrennungsmotors (1) nach einem der Ansprüche 1 bis 10, **dadurch gekennzeichnet, dass** die Aufladeeinrichtung im Betrieb in Abhängigkeit vom Betriebsverhalten des Verbrennungsmotors (1) und mit Hilfe der Leitungsverbindungen (11a - 11d), der Ventileinrichtungen (15a - 15e) sowie dem Motor-Generator (14) des Rekuperationsladers (12), zumindest zwischen einer Verstärkerbetriebsart und einer Rekuperationsbetriebsart oder zwischen einer Standardbetriebsart, einer Verstärkerbetriebsart und einer Rekuperationsbetriebsart umgeschaltet werden kann.

12. Betriebsverfahren nach Anspruch 11, für eine Aufladeeinrichtung eines Verbrennungsmotors gemäß einem der Ansprüche 3 oder 6 **dadurch gekennzeichnet, dass** die Ventileinrichtungen (15a - 15e) sowie der Rekuperationslader (12) jeweils so eingestellt werden,
- dass zur Durchführung der Verstärkerbetriebsart, der Ladeluftmassenstrom (26) von der Hochdruckseite (HD) des Frischluftverdichters (6) zur Niederdruckseite (ND) der Verdichter-Turbine (13) und von der Hochdruckseite (HD) der Verdichter-Turbine (13) zurück in die Ladeluftzuleitung (8) und zur Ansaugseite (9) des Verbrennungsmotors (1) geleitet wird, sowie der Motor-Generator (14) in einen Motorbetrieb, die Verdichter-Turbine (13) zur Druckerhöhung in der Ladeluftzuleitung (8) antreibend, geschaltet wird und
- dass zur Durchführung der Rekuperationsbetriebsart,
der Ladeluftmassenstrom (26) von der Hochdruckseite (HD) des Frischluftverdichters (6,) zumindest teilweise, zur Hochdruckseite (HD) der Verdichter-Turbine (13) und von der Niederdruckseite (ND) der Verdichter-Turbine (13) über einen Abblasstutzen (16) in die Umgebung abgeblasen oder über eine Rückführleitung (16a) in die Frischluftzuführeinrichtung (7) eingeleitet oder zur Ansaugseite (9) des Verbrennungsmotors (1) weitergeleitet wird, sowie der Motor-Generator (14) in einen Generatorbetrieb, von der Verdichter-Turbine (13) zur Energierückgewinnung angetrieben, geschaltet wird und
- dass zur Durchführung der Standardbetriebsart, der Ladeluftmassenstrom (26) von der Hochdruckseite (HD) des Frischluftverdichters (6) über die Ladeluftzuleitung (8) direkt zur Ansaugseite (9) des Verbrennungsmotors geleitet und der Motor-Generator (14) des Rekuperationsladers (12)neutral geschaltet wird.

13. Betriebsverfahren gemäß Anspruch 11 für eine Aufladeeinrichtung eines Verbrennungsmotors gemäß einem der Ansprüche 2 bis 4 sowie 8 bis 10, **dadurch gekennzeichnet,**
- **dass** zur Durchführung der Verstärkerbetriebsart,
der Durchgang vom ersten Ladeluftabzweigpunkt (8a) zur Niederdruckseite (ND) der Verdichter-Turbine (13) geöffnet sowie der Durchgang zum Abblasstutzen (16) oder der Rückführleitung (16a) geschlossen werden und gleichzeitig der Durchgang von der Hochdruckzweigleitung (11b) zur Ladeluftzuleitung (8) geöffnet sowie der Durchgang der Ladeluftzuleitung (8)zwischen dem ersten und dem zweiten Ladeluftverzweigungspunkt (8a, 8b) geschlossen werden, und
- **dass** zur Durchführung der Rekuperationsbetriebsart,
der Durchgang vom ersten Ladeluftabzweigpunkt (8a) zur Niederdruckseite (ND) der Verdichter-Turbine (13) hin und zum Abblasstutzen (16) oder der Rückführleitung (16a) hin geschlossen wird und der Durchgang vom zweiten Ladeluftabzweigpunkt (8b) zur Hochdruckseite (HD) der Verdichter-Turbine (13) hin zumindest teilweise geöffnet und zur Ansaugseite (9) des Verbrennungsmotors (1) hin zumindest teilweise geschlossen wird und der Durchgang von der Niederdruckseite (ND) der Verdichter-Turbine (13) zum Abblasstutzen (16) oder der Rückführleitung (16a) hin geöffnet wird und
- **dass** zur Durchführung der Standardbetriebsart,
der Durchgang vom ersten Ladeluftverzweigungspunkt (8a) zur Niederdruckseite (ND) der Verdichter-Turbine (13)hin und der Durchgang von der Hochdruckzweigleitung (11b) zur Ladeluftzuleitung (8) hin geschlossen sowie der Durchgang der Ladeluftzuleitung (8) von der Niederdruckseite (ND) des Frischluftverdichters (6) zur Ansaugseite (9) des Verbrennungsmotors (1) hin geöffnet werden.

14. Betriebsverfahren gemäß Anspruch 11 für eine Aufladeeinrichtung eines Verbrennungsmotors gemäß einem der Ansprüche 5 bis 7 sowie 8 bis 10, **dadurch gekennzeichnet,**
- **dass** zur Durchführung der Verstärkerbetriebsart,
der Durchgang vom dritten Ladeluftabzweigpunkt (8c) über den ersten Ladeluftabzweigpunkt (8a) zur Niederdruckseite (ND) der Verdichter-Turbine (13) hin und der Durchgang von der Hochdruckseite (HD) der Verdichter-Turbine (13)zur Ladeluftzuleitung (8) hin geöffnet werden wobei gleichzeitig der Durchgang der Ladeluftumleitung (11d) zur Hochdruckseite (HD) der Verdichter-Turbine (13) hin und der Durchgang der Ladeluftzuleitung (8) zwischen dem ersten und dem zweiten Ladeluftverzweigungspunkt (8a, 8b) geschlossen werden, und
- **dass** zur Durchführung der Rekuperationsbetriebsart,
der Durchgang der Ladeluftumleitung (11d) vom dritten Ladeluftverzeigungspunkt (8c) zur Hochdruckseite (HD) der Verdichter-Turbine (13) hin zumindest teilweise geöffnet und zur Ansaugseite (9) des Verbrennungsmotors (1) hin zumindest teilweise geschlossen wird und der Durchgang von der Niederdruckseite (ND) der Verdichter-Turbine (13) zur Ansaugseite (9) des Verbrennungsmotors (13) hin geöffnet wird, wobei gleichzeitig der Durchgang der Ladeluftzuleitung (8) zwischen dem dritten und dem ersten Ladeluftverzeigungspunkt (8c, 8a) geschlossen wird und
- **dass** zur Durchführung der Standardbetriebsart,
der Durchgang der Ladeluftleitung (8) von der Hochdruckseite (HD) des Frischluftverdichter (6) zur Ansaugseite (9) des Verbrennungsmotors (13) geöffnet und der Durchgang der Niederdruckzweigleitung (11a) zur Niederdruckseite (ND) der Verdichter-Turbine (13) hin sowie der Durchgang der Hochdruckzweigleitung (11b) zur Ladeluftzuleitung (8) hin geschlossen werden.

## Claims

1. Supercharging device for an internal combustion engine (1) having an intake side (9) and having an exhaust-gas side (19) and having an intake tract (2) arranged on the intake side (9) and having an exhaust-gas tract (3) arranged on the exhaust-gas side, which supercharging device has
- an exhaust-gas turbocharger (4) having an exhaust-gas turbine (5), which is arranged in the exhaust-gas tract (3), and a fresh-air compressor (6) having a low-pressure side (LP) and a high-pressure side (HP), which is arranged in the intake tract (2) ;
- a fresh-air supply device (7) to which the fresh-air compressor (6) is connected on its low-pressure side (LP), and
- a charge-air feed line (8) which connects the high-pressure side (HP) of the fresh-air compressor (6) to the intake side of the internal combustion engine (1) for the purposes of conducting a charge-air mass flow (26) generated by the fresh-air compressor (6), and
- a recuperation charger (12) which has a compressor-turbine (13) with a high-pressure side (HP) and a low-pressure side (LP) and which has an electromechanical motor-generator (14) coupled to said compressor-turbine,
**characterized in that**
- the compressor-turbine (13) is coupled by means of line connections (11a, 11b, 11e) and valve devices (15a - 15e) to the charge-air feed line (8) in such a way
that the low-pressure side (LP) of the compressor-turbine (13) is connected, at least via a low-pressure branch line (11a) and a first valve device (15a), to the charge-air feed line (8) at a first charge-air branching point (8a), and the high-pressure side (HP) of the compressor-turbine (13) is connected, at least via a high-pressure branch line (11b) and a second valve device (15b), to the charge-air feed line (8) at a second charge-air branching point (8b) downstream of the first charge-air branching point (8a), and
the charge-air feed line (8) can be shut off between the first charge-air branching point (8a) and the second charge-air branching point (8b) by means of the first or second valve device (15a, 15b) or at least one further valve device (15c), such that the recuperation charger (12) is operable in a manner dependent on the settings of the valve devices (15a - 15e), at least firstly in a booster operating mode, in a manner driven by the motor-generator (14), as a compressor for increasing the pressure of the charge-air mass flow (26) in the charge-air line (8), and secondly in a recuperation operating mode, in a manner driven by the charge-air mass flow, as a turbine for energy recovery by means of the motor-generator (14).

2. Supercharging device according to Claim 2, **characterized in that** a blow-off port (16) or a recirculation line (16a) connected to the fresh-air feed line (7) is connected via the abovementioned first valve device (15a) or a further valve device (15d) to the low-pressure branch line (11a) at a low-pressure branching point (11c) between the first charge-air branching point (8a) and the low-pressure side (LP) of the compressor-turbine (13).

3. Supercharging device according to Claim 3, **characterized in that** the first valve device (15a) is a switching valve (15a) which is arranged at the low-pressure branching point (11c), wherein,
- in a valve position with a closed passage from the first charge-air branching point (8a) to the low-pressure side (LP) of the compressor-turbine (13), the passage from the low-pressure side (LP) of the compressor-turbine (13) to the blow-off port (16) or the recirculation line (16a) is open, and
- in a further valve position with an open passage from the first charge-air branch point (8a) to the low-pressure side (LP) of the compressor-turbine (13), the passage to the blow-off port (16) or the recirculation line (16a) is closed.

4. Supercharging device according to Claim 2 or 3, **characterized in that** the second valve device (15b) is a switching valve (15b) which is arranged at the second charge-air branching point (8b), wherein,
- in a valve position with an open passage of the charge-air feed line (8) to the intake side (9) of the internal combustion engine (1), the passage from the charge-air feed line (8) to the high-pressure branch line (11b) is at least partially closed, and
- in a further valve position with a closed passage of the charge-air feed line (8) to the intake side (9) of the internal combustion engine (1) and to the high-pressure branch line (11b), the passage from the high-pressure branch line (11b) to the intake side (9) of the internal combustion engine (1) is open, and
- in a further valve position with an open passage of the charge-air feed line (8) from the high-pressure side (HP) of the fresh-air compressor (6) to the high-pressure branch line (11b), the passage of the charge-air feed line (8) to the intake side (9) of the internal combustion engine (1) is at least partially closed.

5. Supercharging device according to Claim 1, **characterized in that** a charge-air bypass line (11d) is provided which is connected at one side to the charge-air feed line (8) at a third charge-air branching point (8c) upstream of the first charge-air branching point (8a) and which is connected at the other side to the high-pressure branch line (11b) via the abovementioned second valve device (15b) or a further valve device (15d) at a high-pressure branching point (11e), and **in that** the charge-air feed line (8) can be shut off from the first charge-air branching point (8a) toward the third charge-air branching point (8c) by means of the abovementioned first valve device (15a) or a further valve device (15e).

6. Supercharging device according to Claim 5, **characterized in that** the first valve device (15a) is a switching valve (15a) which is arranged at the first charge-air branching point (8a), wherein,
- in a valve position with a closed passage from the first charge-air branching point (8a) toward the low-pressure branch line (11a), the passage of the charge-air feed line (8) from the high-pressure side (HP) of the fresh-air compressor (6) to the intake side (9) of the internal combustion engine (1) is open, and,
- in a further valve position with a closed passage from the first charge-air branching point (8a) toward the intake side (9) of the internal combustion engine (1), the passage from the high-pressure side (HP) of the fresh-air compressor (6) toward the low-pressure branch line (11a) is open, and
- in a further valve position with a closed passage of the charge-air feed line (8) from the first charge-air branching point (8a) toward the high-pressure side (HP) of the fresh-air compressor, the passage from the low-pressure branch line (11a) toward the intake side (9) is open.

7. Supercharging device according to Claim 5 or 6, **characterized in that** the second valve device (15b) is a switching valve (15b) which is arranged at the high-pressure branching point (11e), wherein,
- in a valve position with a closed passage from the charge-air bypass line (11d) toward the high-pressure branch line (11b), the passage from the high-pressure side (HP) of the compressor-turbine (13) toward the intake side (9) of the internal combustion engine (1) is open, and
- in a further valve position with an open passage from the charge-air bypass line (11d) toward the high-pressure side (HP) of the compressor-turbine (13), the passage from the charge-air bypass line (11d) toward the intake side (9) of the internal combustion engine (1) is at least partially closed.

8. Supercharging device according to one of the preceding claims, **characterized in that** one or more charge-air coolers (17) are arranged at one or more positions in the charge-air feed line (8) upstream or downstream of the compressor-turbine (13) in the charge-air mass flow (26) .

9. Supercharging device according to one of the preceding claims, **characterized in that** the compressor-turbine (13) of the recuperation charger (12) has a compressor-turbine housing with, arranged therein, a fixed or variable guide blade arrangement (13a) for optimizing the outflow behavior or inflow behavior of the charge-air mass flow (26).

10. Supercharging device according to one of the preceding claims, **characterized in that** the fresh-air supply device (7) has a fresh-air supply line (7a) and a fresh-air filter device (7b).

11. Operating method for a supercharging device of an internal combustion engine (1) according to one of Claims 1 to 10, **characterized in that** the supercharging device can, during operation, be switched at least between a booster operating mode and a recuperation operating mode, or between a standard operating mode, a booster operating mode and a recuperation operating mode, in a manner dependent on the operating behavior of the internal combustion engine (1) and by means of the line connections (11a - 11d), the valve devices (15a - 15e) and the motor-generator (14) of the recuperation charger (12).

12. Operating method according to Claim 11, for a supercharging device of an internal combustion engine according to either of Claims 3 and 6, **characterized in that** the valve devices (15a - 15e) and the recuperation charger (12) are in each case set
- such that, to implement the booster operating mode, the charge-air mass flow (26) is conducted from the high-pressure side (HP) of the fresh-air compressor (6) to the low-pressure side (LP) of the compressor-turbine (13) and from the high-pressure side (HP) of the compressor-turbine (13) back into the charge-air feed line (8) and to the intake side (9) of the internal combustion engine (1), and the motor-generator (14) is switched into a motor mode so as to drive the compressor-turbine (13) for the purposes of increasing the pressure in the charge-air feed line (8), and
- such that, to implement the recuperation operating mode, the charge-air mass flow (26) is blown off from the high-pressure side (HP) of the fresh-air compressor (6) at least partially to the high-pressure side (HP) of the compressor-turbine (13) and from the low-pressure side (LP) of the compressor-turbine (13) via a blow-off port (16) into the surroundings, or is introduced via a recirculation line (16a) into the fresh-air supply device (7) or is conducted onward to the intake side (9) of the internal combustion engine (1), and the motor-generator (14) is switched into a generator mode so as to be driven by the compressor-turbine (13) for the purposes of energy recovery, and
- such that, to implement the standard operating mode, the charge-air mass flow (26) is conducted from the high-pressure side (HP) of the fresh-air compressor (6) via the charge-air feed line (8) directly to the intake side (9) of the internal combustion engine, and the motor-generator (14) of the recuperation charger (12) is switched into a neutral state.

13. Operating method according to Claim 11 for a supercharging device of an internal combustion engine according to one of Claims 2 to 4 and 8 to 10, **characterized**
- **in that**, to implement the booster operating mode,
the passage from the first charge-air branch point (8a) to the low-pressure side (LP) of the compressor-turbine (13) is opened and the passage to the blow-off port (16) or the recirculation line (16a) is closed, and at the same time, the passage from the high-pressure branch line (11b) to the charge-air feed line (8) is opened and the passage of the charge-air feed line (8) between the first and the second charge-air branching point (8a, 8b) is closed,
- **in that**, to implement the recuperation operating mode,
the passage from the first charge-air branch point (8a) toward the low-pressure side (LP) of the compressor-turbine (13) and toward the blow-off port (16) or the recirculation line (16a) is closed, and the passage from the second charge-air branch point (8b) toward the high-pressure side (HP) of the compressor-turbine (13) is at least partially opened and that toward the intake side (9) of the internal combustion engine (1) is at least partially closed, and the passage from the low-pressure side (LP) of the compressor-turbine (13) toward the blow-off port (16) or the recirculation line (16a) is opened, and
- **in that**, to implement the standard operating mode,
the passage from the first charge-air branching point (8a) toward the low-pressure side (LP) of the compressor-turbine (13) and the passage from the high-pressure branch line (11b) toward the charge-air feed line (8) is closed, and the passage of the charge-air feed line (8) from the low-pressure side (LP) of the fresh-air compressor (6) toward the intake side (9) of the internal combustion engine (1) is opened.

14. Operating method according to Claim 11 for a supercharging device of an internal combustion engine according to one of Claims 5 to 7 and 8 to 10, **characterized**
- **in that**, to implement the booster operating mode,
the passage from the third charge-air branch point (8c) via the first charge-air branch point (8a) toward the low-pressure side (LP) of the compressor-turbine (13) and the passage from the high-pressure side (HP) of the compressor-turbine (13) toward the charge-air feed line (8) are opened, wherein, at the same time, the passage of the charge-air bypass line (11d) toward the high-pressure side (HP) of the compressor-turbine (13) and the passage of the charge-air feed line (8) between the first and the second charge-air branching points (8a, 8b) are closed, and
- **in that**, to implement the recuperation operating mode,
the passage of the charge-air bypass line (11d) from the third charge-air branching point (8c) toward the high-pressure side (HP) of the compressor-turbine (13) is at least partially opened and that toward the intake side (9) of the internal combustion engine (1) is at least partially closed, and the passage from the low-pressure side (LP) of the compressor-turbine (13) toward the intake side (9) of the internal combustion engine (13) is opened, wherein, at the same time, the passage of the charge-air feed line (8) between the third and the first charge-air branching points (8c, 8a) is closed, and
- **in that**, to implement the standard operating mode,
the passage of the charge-air line (8) from the high-pressure side (HP) of the fresh-air compressor (6) to the intake side (9) of the internal combustion engine (13) is opened, and the passage of the low-pressure branch line (11a) toward the low-pressure side (LP) of the compressor-turbine (13) and the passage of the high-pressure branch line (11b) toward the charge-air feed line (8) are closed.

## Revendications

1. Dispositif de suralimentation pour un moteur à combustion interne (1) comprenant un côté d'admission (9) et un côté d'échappement (19) et une ligne d'admission (2) disposée sur le côté d'admission (9) et une ligne d'échappement (3) disposée sur le côté d'échappement, lequel possède
- un turbocompresseur de gaz d'échappement (4) doté d'une turbine à gaz d'échappement (5) qui est disposée dans la ligne d'échappement (3) et un compresseur d'air frais (6) pourvu d'un côté basse pression (ND) et d'un côté haute pression (HD) et qui est disposé dans la ligne d'admission (2) ;
- un dispositif d'acheminement d'air frais (7) auquel le compresseur d'air frais (6) est raccordé par son côté basse pression (ND) et
- une conduite d'arrivée d'air de charge (8) qui relie le côté haute pression (HD) du compresseur d'air frais (6) au côté d'admission du moteur à combustion interne (1) en vue du guidage d'un débit massique d'air de charge (26) généré par le compresseur d'air frais (6) et
- un chargeur à récupération (12) qui possède une turbine de compresseur (13) pourvue d'un côté haute pression (HD) et d'un côté basse pression (ND) et un moto-générateur (14) électromécanique couplé à celle-ci,
**caractérisé en ce que**
- la turbine de compresseur (13) est connectée à la conduite d'arrivée d'air de charge (8) par le biais de liaisons par conduite (11a, 11b, 11e) et de dispositifs à vanne (15a - 15e) de telle sorte
que le côté basse pression (ND) de la turbine de compresseur (13) se trouve en liaison avec la conduite d'arrivée d'air de charge (8) au moins par le biais d'une conduite de branche de basse pression (11a) et d'un premier dispositif à vanne (15a) en un premier point de bifurcation d'air de charge (8a), et le côté haute pression (HD) de la turbine de compresseur (13) se trouve en liaison avec la conduite d'arrivée d'air de charge (8) au moins par le biais d'une conduite de branche de haute pression (11b) et d'un deuxième dispositif à vanne (15b) en un deuxième point de bifurcation d'air de charge (8b) en aval du premier point de bifurcation d'air de charge (8a) et
la conduite d'arrivée d'air de charge (8) peut être fermée entre le premier point de bifurcation d'air de charge (8a) et le deuxième point de bifurcation d'air de charge (8b) au moyen du premier ou du deuxième dispositif à vanne (15a, 15b) ou au moyen d'au moins un dispositif à vanne supplémentaire (15c),
de sorte que le chargeur à récupération (12), en fonction des réglages des dispositifs à vanne (15a - 15e), puisse fonctionner au moins d'un côté dans un mode de fonctionnement en amplificateur, entraîné par le moto-générateur (14), en tant que compresseur pour augmenter la pression du débit massique d'air de charge (26) dans la conduite d'arrivée d'air de charge (8) et d'un autre côté dans un mode de fonctionnement de récupération, entraîné par le débit massique d'air de charge, en tant que turbine pour la récupération d'énergie au moyen du moto-générateur (14).

2. Dispositif de suralimentation selon la revendication 1, **caractérisé en ce qu'**un manchon de décharge (16) ou une conduite de retour (16a) raccordée à la conduite d'acheminement d'air frais (7) se trouve en liaison avec la conduite de branche de basse pression (11a) par le biais du premier dispositif à vanne (15a) susmentionné ou d'un dispositif à vanne supplémentaire (15d) dans un point de bifurcation de basse pression (11c) entre le premier point de bifurcation d'air de charge (8a) et le côté basse pression (ND) de la turbine de compresseur (13).

3. Dispositif de suralimentation selon la revendication 2, **caractérisé en ce que** le premier dispositif à vanne (15a) est une vanne de permutation (15a) qui est disposée dans le point de bifurcation de basse pression (11c)
- dans une position de vanne, dans laquelle le passage du premier point de bifurcation d'air de charge (8a) vers le côté basse pression (ND) de la turbine de compresseur (13) est fermé, le passage du côté basse pression (ND) de la turbine de compresseur (13) vers le manchon de décharge (16) ou la conduite de retour (16a) étant ouvert et
- dans une autre position de vanne, dans laquelle le passage du premier point de bifurcation d'air de charge (8a) vers le côté basse pression (ND) de la turbine de compresseur (13) est ouvert, le passage vers le manchon de décharge (16) ou la conduite de retour (16a) étant fermé.

4. Dispositif de suralimentation selon la revendication 2 ou 3, **caractérisé en ce que** le deuxième dispositif à vanne (15b) est une vanne de permutation (15b) qui est disposée dans le deuxième point de bifurcation d'air de charge (8b)
- dans une position de vanne, dans laquelle le passage de la conduite d'arrivée d'air de charge (8) vers le côté d'admission (9) du moteur à combustion interne (1) est ouvert, le passage de la conduite d'arrivée d'air de charge (8) vers la conduite de branche de haute pression (11b) étant au moins partiellement fermé et
- dans une autre position de vanne, dans laquelle le passage de la conduite d'arrivée d'air de charge (8) vers le côté d'admission (9) du moteur à combustion interne (1) et vers la conduite de branche de haute pression (11b) est fermé, le passage de la conduite de branche de haute pression (11b) vers le côté d'admission (9) du moteur à combustion interne (1) étant ouvert et
- dans une autre position de vanne, dans laquelle le passage de la conduite d'arrivée d'air de charge (8) depuis le côté haute pression (HD) du compresseur d'air frais (6) vers la conduite de branche de haute pression (11b) est ouvert, le passage de la conduite d'arrivée d'air de charge (8) vers le côté d'admission (9) du moteur à combustion interne (1) étant au moins partiellement fermé.

5. Dispositif de suralimentation selon la revendication 1, **caractérisé en ce qu'**une dérivation d'air de charge (11d) est prévue, laquelle est raccordée d'un côté à la conduite d'arrivée d'air de charge (8) au niveau d'un troisième point de bifurcation d'air de charge (8c) en amont du premier point de bifurcation d'air de charge (8a) et, de l'autre côté, se trouve en liaison avec la conduite de branche de haute pression (11b) par le biais du deuxième dispositif à vanne (15b) susmentionné ou d'un dispositif à vanne supplémentaire (15d) en un point de bifurcation de haute pression (11e) et **en ce que** la conduite d'arrivée d'air de charge (8) peut être fermée du premier point de bifurcation d'air de charge (8a) vers le troisième point de bifurcation d'air de charge (8c) au moyen du premier dispositif à vanne (15a) susmentionné ou d'un dispositif à vanne supplémentaire (15e).

6. Dispositif de suralimentation selon la revendication 5, **caractérisé en ce que** le premier dispositif à vanne (15a) est une vanne de permutation (15a) qui est disposée dans le premier point de bifurcation d'air de charge (8a),
- dans une position de vanne, dans laquelle le passage du premier point de bifurcation d'air de charge (8a) vers la conduite de branche de basse pression (11a) est fermé, le passage de la conduite d'arrivée d'air de charge (8) du côté haute pression (HD) du compresseur d'air frais (6) vers le côté d'admission (9) du moteur à combustion interne (1) étant ouvert et
- dans une autre position de vanne, dans laquelle le passage du premier point de bifurcation d'air de charge (8a) vers le côté d'admission (9) du moteur à combustion interne (1) est fermé, le passage du côté haute pression (HD) du compresseur d'air frais (6) vers la conduite de branche de basse pression (11a) étant ouvert et
- dans une autre position de vanne, dans laquelle le passage de la conduite d'arrivée d'air de charge (8) du premier point de bifurcation d'air de charge (8a) vers le côté haute pression (HD) du compresseur d'air frais est fermé, le passage de la conduite de branche de basse pression (11a) vers le côté d'admission (9) étant ouvert.

7. Dispositif de suralimentation selon la revendication 5 ou 6, **caractérisé en ce que** le deuxième dispositif à vanne (15b) est une vanne de permutation (15b) qui est disposée dans le point de bifurcation de haute pression (11e),
- dans une position de vanne, dans laquelle le passage de la dérivation d'air de charge (11d) vers la conduite de branche de haute pression (11b) est fermé, le passage du côté haute pression (HD) de la turbine de compresseur (13) vers le côté d'admission (9) du moteur à combustion interne (1) étant ouvert et
- dans une autre position de vanne, dans laquelle le passage de la dérivation d'air de charge (11d) vers le côté haute pression (HD) de la turbine de compresseur (13) est ouvert, le passage de la dérivation d'air de charge (11d) vers le côté d'admission (9) du moteur à combustion interne (1) étant au moins partiellement fermé.

8. Dispositif de suralimentation selon l'une des revendications précédentes, **caractérisé en ce qu'**un ou plusieurs refroidisseurs d'air de charge (17) sont disposés en une ou plusieurs positions dans la conduite d'arrivée d'air de charge (8) dans le débit massique d'air de charge (26) en amont ou en aval de la turbine de compresseur (13).

9. Dispositif de suralimentation selon l'une des revendications précédentes, **caractérisé en ce que** la turbine de compresseur (13) du chargeur à récupération (12) possède un carter de turbine de compresseur dans lequel est disposé un arrangement d'aubes directrices (13a) fixe ou variable destiné à optimiser le comportement de flux partant ou de flux arrivant du débit massique d'air de charge (26).

10. Dispositif de suralimentation selon l'une des revendications précédentes, **caractérisé en ce que** le dispositif d'acheminement d'air frais (7) possède une conduite d'acheminement d'air frais (7a) et un dispositif de filtrage d'air frais (7b).

11. Procédé de fonctionnement pour un dispositif de suralimentation d'un moteur à combustion interne (1) selon l'une des revendications 1 à 10, **caractérisé en ce que** le dispositif de suralimentation peut être permuté en fonctionnement au moins entre un mode de fonctionnement en amplificateur et un mode de fonctionnement de récupération ou entre un mode de fonctionnement standard, un mode de fonctionnement en amplificateur et un mode de fonctionnement de récupération, en fonction du comportement opérationnel du moteur à combustion interne (1) et à l'aide des liaisons par conduite (11a - 11d), des dispositifs à vanne (15a - 15e) ainsi que du moto-générateur (14) du chargeur à récupération (12).

12. Procédé de fonctionnement selon la revendication 11, pour un dispositif de suralimentation d'un moteur à combustion interne selon l'une des revendications 3 ou 6, **caractérisé en ce que** les dispositifs à vanne (15a - 15e) ainsi que le chargeur à récupération (12) sont respectivement réglés de telle sorte
- que pour exécuter le mode de fonctionnement en amplificateur, le débit massique d'air de charge (26) est guidé depuis le côté haute pression (HD) du compresseur d'air frais (6) vers le côté basse pression (ND) de la turbine de compresseur (13) et depuis le côté haute pression (HD) de la turbine de compresseur (13) en retour vers la conduite d'arrivée d'air de charge (8) et vers le côté d'admission (9) du moteur à combustion interne (1), et le moto-générateur (14) est commuté dans un fonctionnement en moteur où il entraîne la turbine de compresseur (13) en vue d'augmenter la pression dans la conduite d'arrivée d'air de charge (8) et
- que pour exécuter le mode de fonctionnement de récupération, le débit massique d'air de charge (26) est retransmis depuis le côté haute pression (HD) du compresseur d'air frais (6), au moins partiellement, vers le côté haute pression (HD) de la turbine de compresseur (13) et, depuis le côté basse pression (ND) de la turbine de compresseur (13), déchargé dans l'environnement par le biais d'un manchon de décharge (16) ou injecté dans le dispositif d'acheminement d'air frais (7) par le biais d'une conduite de retour (16a) ou retransmis vers le côté d'admission (9) du moteur à combustion interne (1), et le moto-générateur (14) est commuté dans un fonctionnement en générateur où il est entraîné par la turbine de compresseur (13) en vue de récupérer de l'énergie et
- que pour exécuter le mode de fonctionnement standard, le débit massique d'air de charge (26) est guidé depuis le côté haute pression (HD) du compresseur d'air frais (6) directement vers le côté d'admission (9) du moteur à combustion interne par le biais de la conduite d'arrivée d'air de charge (8) et le moto-générateur (14) du chargeur à récupération (12) est commuté en position neutre.

13. Procédé de fonctionnement selon la revendication 11, pour un dispositif de suralimentation d'un moteur à combustion interne selon l'une des revendications 2 à 4 ainsi que 8 à 10, **caractérisé en ce**
- **que** pour exécuter le mode de fonctionnement en amplificateur, le passage du premier point de bifurcation d'air de charge (8a) vers le côté basse pression (ND) de la turbine de compresseur (13) est ouvert et le passage vers le manchon de décharge (16) ou la conduite de retour (16a) est fermé et, simultanément, le passage de la conduite de branche de haute pression (11b) vers la conduite d'arrivée d'air de charge (8) est ouvert et le passage de la conduite d'arrivée d'air de charge (8) entre le premier et le deuxième point de bifurcation d'air de charge (8a, 8b) est fermé et
- **que** pour exécuter le mode de fonctionnement de récupération, le passage du premier point de bifurcation d'air de charge (8a) vers le côté basse pression (ND) de la turbine de compresseur (13) et vers le manchon de décharge (16) ou la conduite de retour (16a) est fermé et le passage du deuxième point de bifurcation d'air de charge (8b) vers le côté haute pression (HD) de la turbine de compresseur (13) est au moins partiellement ouvert et vers le côté d'admission (9) du moteur à combustion interne (1) est au moins partiellement fermé et le passage du côté basse pression (ND) de la turbine de compresseur (13) vers le manchon de décharge (16) ou la conduite de retour (16a) est ouvert et
- **que** pour exécuter le mode de fonctionnement standard, le passage du premier point de bifurcation d'air de charge (8a) vers le côté basse pression (ND) de la turbine de compresseur (13) et le passage de la conduite de branche de haute pression (11b) vers la conduite d'arrivée d'air de charge (8) est fermé et le passage de la conduite d'arrivée d'air de charge (8) du côté basse pression (ND) du compresseur d'air frais (6) vers le côté d'admission (9) du moteur à combustion interne (1) est ouvert.

14. Procédé de fonctionnement selon la revendication 11, pour un dispositif de suralimentation d'un moteur à combustion interne selon l'une des revendications 5 à 7 ainsi que 8 à 10, **caractérisé en ce**
- **que** pour exécuter le mode de fonctionnement en amplificateur, le passage du troisième point de bifurcation d'air de charge (8c) par le biais du point de bifurcation d'air de charge (8a) vers le côté basse pression (ND) de la turbine de compresseur (13) ainsi que le passage du côté haute pression (HD) de la turbine de compresseur (13) vers la conduite d'arrivée d'air de charge (8) sont ouverts, le passage de la dérivation d'air de charge (11d) vers le côté haute pression (HD) de la turbine de compresseur (13) et le passage de la conduite d'arrivée d'air de charge (8) entre le premier et le deuxième point de bifurcation d'air de charge (8a, 8b) étant simultanément fermés et
- **que** pour exécuter le mode de fonctionnement de récupération, le passage de la dérivation d'air de charge (11d) depuis le troisième point de bifurcation d'air de charge (8c) vers le côté haute pression (HD) de la turbine de compresseur (13) est au moins partiellement ouvert et vers le côté d'admission (9) du moteur à combustion interne (1) est au moins partiellement fermé et le passage du côté basse pression (ND) de la turbine de compresseur (13) vers le côté d'admission (9) du moteur à combustion interne (13) est ouvert, le passage de la conduite d'arrivée d'air de charge (8) entre le troisième et le premier point de bifurcation d'air de charge (8c, 8a) étant simultanément fermé et
- **que** pour exécuter le mode de fonctionnement standard, le passage de la conduite d'arrivée d'air de charge (8) depuis le côté haute pression (HD) du compresseur d'air frais (6) vers le côté d'admission (9) du moteur à combustion interne (13) est ouvert et le passage de la conduite de branche de basse pression (11a) vers le côté basse pression (ND) de la turbine de compresseur (13) ainsi que le passage de la conduite de branche de haute pression (11b) vers la conduite d'arrivée d'air de charge (8) sont fermés.
